# EUROPEAN PATENT SPECIFICATION

(11) **EP 3 511 802 B1**
(45) Date of publication and mention of the grant of the patent: **28.07.2021**
(21) Application number: 18202933.0
(22) Date of filing: 26.10.2018
(51) Int. Cl.: G06F 3/01, G06F 21/32

(54) **MOBILE TERMINAL**
MOBILES ENDGERÄT
TERMINAL MOBILE

(30) Priority: 22.12.2017 KR 20170178628
(43) Date of publication of application: 17.07.2019
(73) Proprietor: LG Electronics Inc., SEOUL, 07336 (KR)
(72) Inventor: SHIM, Hongjo, Seoul 06772 (KR); KIM, Hyunwoo, Seoul 06772 (KR)
(74) Representative: Schornack, Oliver

(56) References cited:
- US-A1- 2016 342 781

## Description

### BACKGROUND OF THE INVENTION

### 1. Field of the Invention

The present invention relates to a mobile terminal having a piezoelectric actuator.

### 2. Description of the Related Art

Electronic devices may be divided into mobile/portable terminals and stationary terminals according to mobility. Also, the mobile terminals may be classified into handheld types and vehicle mount types according to whether or not a user can directly carry.

The electronic device (or the terminal) has various functions according to development of technologies. For example, an electronic device can be allowed to capture still images or moving images, play music or video files, play games, receive broadcast and the like, so as to be implemented as an integrated multimedia player. Efforts are ongoing to support and increase the functionality of electronic devices. Such efforts include software improvements, as well as changes and improvements in the structural components.

In recent years, studies have been conducted to provide a user with various haptic feedbacks. An exemplary haptic feedback is transfer of vibration. In the past, a linear resonant actuator (LRA) has been generally used to generate vibration. However, as compared with a piezoelectric actuator described later, the linear resonant actuator has limitations such as a slow response speed and a narrow operating frequency range.

The piezoelectric actuator is an actuator driven using a piezoelectric element having a size or shape instantaneously changed by an electric field. The piezoelectric actuator has an advantage of being capable of implementing various haptic effects because of a high response speed and a wide operating frequency range. In addition, there is another advantage in that the piezoelectric actuator has no limitation in size or thickness and thus is more freely formed than the linear resonant actuator.

Meanwhile, in recent years, a mobile terminal equipped with a fingerprint sensor has become popular to improve security. Previously, the fingerprint sensor was generally disposed on a bezel. With the release of an almost bezel-less mobile terminal for the implementation of a large screen, studies have been conducted to dispose the fingerprint sensor under a display part.

US 2016/0342781 A1 refers to a mobile terminal including a display unit installed in a front side of the mobile terminal. A fingerprint sensing unit is mounted on the display unit, and a haptic module is installed in the display unit.

### SUMMARY OF THE INVENTION

The present invention relates to a mobile terminal as defined in claim 1. Preferred embodiments are defined by the dependent claims.

The first object of the present invention is to provide a structure capable of effectively supplying vibration feedback to a user during a fingerprint recognition process, when a fingerprint sensor is disposed below a display part.

The second object of the present application, which is not part of the claimed invention, is to provide a structure capable of supplying fingerprint recognition and vibration feedback through a rear key disposed on a rear surface of a mobile terminal.

The third object of the present application, which is not part of the claimed invention, is to provide various user interfaces using a plurality of vibration elements, such as a piezoelectric actuator, and other sensors (touch sensor, grip sensor).

In order to achieve the first object, a mobile terminal of the present invention includes: a window; a display disposed on the underside of the window to output visual information through the window and including an organic light emitting diode; a fingerprint sensor disposed on the underside of the display to sense a fingerprint of a user on the window; and a piezoelectric actuator formed in an annular shape with a hollow portion to receive the fingerprint sensor in the hollow portion and configured to transfer vibration to the window or sense a force applied to the window.

The mobile terminal may further include: a buffer sheet attached to the underside of the display; and a thermal sheet attached to the underside of the buffer sheet to diffuse heat generated in the display, wherein the fingerprint sensor may be attached to the underside of the display, and the piezoelectric actuator may be attached to the underside of the thermal sheet.

The mobile terminal may further include a flexible circuit disposed between the thermal sheet and the piezoelectric actuator, formed in an annular shape to receive the fingerprint sensor therein, and electrically connected to the piezoelectric actuator.

First and second electrodes may be disposed on the both-side top surfaces of the piezoelectric actuator, respectively, with the fingerprint sensor therebetween, and the flexible circuit may be electrically connected to the first and second electrodes and attached to the underside of the thermal sheet.

The mobile terminal may further include: a flexible circuit electrically connected to the first and second electrodes provided on the one-side top surface of the piezoelectric actuator; and a vibration transfer member formed in an annular shape to receive the fingerprint sensor therein, disposed to cover the flexible circuit, and attached to the underside of the thermal sheet.

The vibration transfer member may include: a first portion disposed between the flexible circuit and the thermal sheet; and a second portion extended from the first portion and disposed between the piezoelectric actuator and the thermal sheet, with a greater thickness than that of the first portion, wherein the first portion and the second portion may be formed in an annular shape to receive the fingerprint sensor therein.

The vibration transfer member may further include a support portion extending downwardly from the second portion and supported by a frame on which the piezoelectric actuator is supported.

The flexible circuit and the support portion may be disposed at both sides, respectively, with the fingerprint sensor therebetween.

The mobile terminal may further include a flexible printed circuit board, FPCB, electrically connected to the fingerprint sensor and extended in one direction from the fingerprint sensor, wherein the FPCB may be electrically connected to the first and second electrodes provided on the top surface of the piezoelectric actuator.

The mobile terminal may further include a controller for controlling a voltage applied to the piezoelectric actuator based on the fingerprint sensed by the fingerprint sensor.

The mobile terminal may further include a controller for controlling the driving of the display based on the fingerprint sensed by the fingerprint sensor and the force applied to the window and sensed by the piezoelectric actuator.

The following part of the summary of the invention relates to further embodiments of the application, which are not part of the claimed invention.

In addition, in order to achieve the second object, a mobile terminal may include: a display part for outputting visual information to the front surface; a rear key including a fingerprint sensor for sensing a fingerprint of a user and disposed on the rear surface to overlap with the display part in the thickness direction; a piezoelectric actuator disposed on the underside of the rear key to transfer vibration to the rear key or sense a force applied to the rear key; and a frame supporting the piezoelectric actuator and including a recess portion in the top surface to define a cavity with the underside of the piezoelectric actuator.

The mobile terminal may further include a flexible circuit disposed between the rear key and the piezoelectric actuator and electrically connected to first and second electrodes of the piezoelectric actuator.

Further, in order to achieve the third object, a mobile terminal may include: a touch screen having an organic light emitting diode; a fingerprint sensor; a piezoelectric actuator; and a controller for controlling the driving of the touch screen and the piezoelectric actuator, wherein the controller is configured to: use the piezoelectric actuator to sense a force applied to a preset region of the touch screen, when the touch screen is turned off; switch the preset region into the on state; sense a fingerprint of a user on the preset region; and control the driving of the touch screen based on the fingerprint sensed by the fingerprint sensor.

The controller may be further configured to display a graphic object on the preset region of the touch screen, when the touch screen is turned off.

The controller may be further configured to control a voltage applied to the piezoelectric actuator based on the fingerprint sensed by the fingerprint sensor.

Furthermore, the third object may be achieved by a mobile terminal including: a touch screen for outputting visual information; a plurality of vibration elements; and a controller for controlling the driving of the touch screen and the plurality of vibration elements, wherein the controller is configured to: sense the touch position of the touch screen; drive any one of the plurality of vibration elements to generate vibration based on the sensed touch position; sense the movement of the touch; and change the vibration element generating vibration to another vibration element based on the moved touch position.

The controller may drive the vibration element, which is adjacent to the touch position, of the plurality of vibration elements.

The controller may control a current applied to the vibration element adjacent to the touch position, based on a distance between the touch position and the adjacent vibration element.

At least one of the plurality of vibration elements may be a piezoelectric actuator.

Still furthermore, the third object may be achieved by a mobile terminal including: a plurality of vibration elements; a grip sensor part for sensing the grip of the terminal body; and a controller for controlling the driving of the plurality of vibration elements, wherein the controller is configured to: use the grip sensor part to sense the grip of the terminal body; and control the driving of each of the plurality of vibration elements to output one of a plurality of vibration patterns based on the sensed grip position.

The grip sensor part may include a first grip sensor and a second grip sensor that are disposed on the left side and the right side of the terminal body, respectively, and the controller may drive any one of the plurality of vibration elements, when the grips of the first and second grip sensors are all sensed, and drive all the vibration elements, when the grip of any one of the first and second grip sensors is sensed.

Still furthermore, the third object may be achieved by a mobile terminal including: a display part for outputting visual information; a plurality of vibration elements; a grip sensor part for sensing the grip of the terminal body; and a controller for controlling the driving of the plurality of vibration elements, wherein the controller is configured to: use the grip sensor part to sense the grip of the terminal body; sense the movement of the grip; and drive any one of the plurality of vibration elements to generate vibration based on the moved grip position.

The controller may drive the vibration element, which is adjacent to the sensed grip position, of the plurality of vibration elements.

The controller may control a current applied to the adjacent vibration element based on the moved grip position.

The effects obtained through the above-described solutions are as follows.

First, the fingerprint sensor is disposed on the underside of the display part including the OLED display and the piezoelectric actuator is formed in an annular shape to surround the fingerprint sensor and attached to the underside of the display part, as a result of which the vibration feedback can be effectively supplied to the user during the fingerprint recognition process.

In particular, the vibration (or force) transfer structure between the piezoelectric actuator and the display part is different depending on the arrangement type of the electrodes provided on the piezoelectric actuator and the connection structure of the electrodes and the flexible circuit, as a result of which the vibration feedback can be clearly transferred to the display part and the force applied to the display part by the user can be clearly transferred to the piezoelectric actuator.

Second, the fingerprint sensor is built in the rear key, the piezoelectric actuator is disposed on the underside of the rear key, and the recess portion for the vibration of the piezoelectric actuator is defined in the frame supporting the piezoelectric actuator, as a result of which it is possible to implement the mobile terminal capable of supplying fingerprint recognition and vibration feedback.

Third, various user interfaces can be provided using the plurality of vibration elements, such as the piezoelectric actuator, and other sensors (touch sensor, grip sensor), as a result of which it is possible to implement the mobile terminal satisfying the sensibility of the user.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a block diagram showing a mobile terminal related to the present invention.
FIGS. 2 and 3 are concept views showing the mobile terminal according to one embodiment of the present invention, when viewed in different directions.
FIG. 4 (a) is a plan view showing one example of a piezoelectric actuator applied to the mobile terminal of the present invention, and FIG. 4 (b) is a concept view showing a structure in which the piezoelectric actuator of FIG. 4 (a) is disposed together with a fingerprint sensor.
FIG. 5 (a) is a plan view showing another example of a piezoelectric actuator applied to the mobile terminal of the present invention, and FIG. 5 (b) is a concept view showing a structure in which the piezoelectric actuator of FIG. 5 (a) is disposed together with a fingerprint sensor.
FIG. 6 is a concept view showing a structure in which the piezoelectric actuator applied to the mobile terminal of the present invention is electrically connected to an FPCB of the fingerprint sensor.
FIG. 7 is a concept view showing a structure in which the piezoelectric actuator is applied to an operation unit applied to the mobile terminal of the present invention.
FIG. 8 is a concept view showing the force-voltage characteristics of the piezoelectric actuator.
FIG. 9 is a concept view showing one example of a method of controlling a mobile terminal using a piezoelectric actuator and a fingerprint sensor.
FIG. 10 is a concept view showing one example of a method of controlling a mobile terminal using a plurality of vibration elements.
FIG. 11 is a concept view showing one example of a method of controlling a mobile terminal using a grip sensor and a plurality of vibration elements.
FIG. 12 is a concept view showing another example of the method of controlling the mobile terminal using the grip sensor and the plurality of vibration elements.

### DETAILED DESCRIPTION OF THE PREFERRED EMBODIMENTS

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In describing the present disclosure, if a detailed explanation for a related known function or construction is considered to unnecessarily divert the gist of the present disclosure, such explanation has been omitted but would be understood by those skilled in the art. The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the another element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

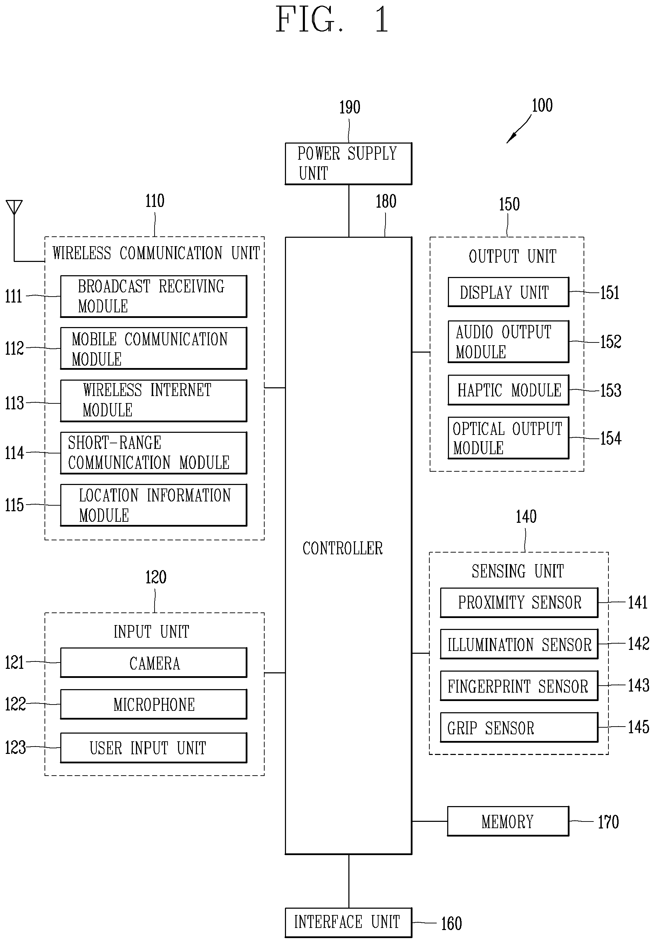

FIG. 1A is a block diagram of a mobile terminal in accordance with the present invention.

The mobile terminal 100 may be shown having components such as a wireless communication unit 110, an input unit 120, a sensing unit 140, an output unit 150, an interface unit 160, a memory 170, a controller 180, and a power supply unit 190. FIG. 1 shows the mobile terminal 100 having various components, but it may be understood that implementing all of the illustrated components is not a requirement. Greater or fewer components may alternatively be implemented.

In more detail, the wireless communication unit 110 may typically include one or more modules which permit communications such as wireless communications between the mobile terminal 100 and a wireless communication system, communications between the mobile terminal 100 and another mobile terminal, or communications between the mobile terminal 100 and an external server. Further, the wireless communication unit 110 may typically include one or more modules which connect the mobile terminal 100 to one or more networks.

The wireless communication unit 110 may include one or more of a broadcast receiving module 111, a mobile communication module 112, a wireless Internet module 113, a short-range communication module 114, and a location information module 115.

The input unit 120 may include a camera 121 or an image input unit for obtaining images or video, a microphone 122, which is one type of audio input device for inputting an audio signal, and a user input unit 123 (for example, a touch key, a mechanical key, and the like) for allowing a user to input information. Data (for example, audio, video, image, and the like) may be obtained by the input unit 120 and may be analyzed and processed according to user commands.

The sensing unit 140 may typically be implemented using one or more sensors configured to sense internal information of the mobile terminal 100, the surrounding environment of the mobile terminal 100, user information, and the like. For example, the sensing unit 140 may include at least one of a proximity sensor 141, an illumination sensor 142, a touch sensor, an acceleration sensor, a magnetic sensor, a G-sensor, a gyroscope sensor, a motion sensor, an RGB sensor, an infrared (IR) sensor, a fingerprint sensor (a finger scan sensor) 143, a grip sensor 145, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like). The mobile terminal disclosed herein may be configured to utilize information obtained from one or more sensors of the sensing unit 140, and combinations thereof.

The output unit 150 may typically be configured to output various types of information, such as audio, video, tactile output, and the like. The output unit 150 may be shown having at least one of a display unit 151, an audio output module 152, a haptic module 153, and an optical output module 154. The display unit 151 may have an inter-layered structure or an integrated structure with a touch sensor in order to implement a touch screen. The touch screen may function as the user input unit 123 which provides an input interface between the mobile terminal 100 and the user and simultaneously provide an output interface between the mobile terminal 100 and a user.

The interface unit 160 serves as an interface with various types of external devices that are coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control an overall operation of the mobile terminal 100, in addition to the operations associated with the application programs. The controller 180 may provide or process information or functions appropriate for a user by processing signals, data, information and the like, which are input or output by the aforementioned various components, or activating application programs stored in the memory 170.

Also, the controller 180 may control at least some of the components illustrated in FIG. 1A, to execute an application program that have been stored in the memory 170. In addition, the controller 180 may control at least two of those components included in the mobile terminal to activate the application program.

The power supply unit 190 may be configured to receive external power or provide internal power in order to supply appropriate power required for operating elements and components included in the wearable device 100, under the control of the controller 180. The power supply unit 190 may include a battery, and the battery may be configured as an embedded battery or a detachable battery.

At least part of the components may cooperatively operate to implement an operation, a control or a control method of the mobile terminal 100 according to various embodiments disclosed herein. Also, the operation, the control or the control method of the mobile terminal 100 may be implemented on electronic device by an activation of at least one application program stored in the memory 170.

Hereinafter, description will be given in more detail of the aforementioned components with reference to FIG. 1A, prior to describing various embodiments implemented through the mobile terminal 100.

First, regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneous reception of two or more broadcast channels, or to support switching among broadcast channels.

The mobile communication module 112 may transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000 (Code Division Multi Access 2000), EV-DO (Enhanced Voice-Data Optimized or Enhanced Voice-Data Only), Wideband CDMA (WCDMA), High Speed Downlink Packet access (HSDPA), HSUPA (High Speed Uplink Packet Access), Long Term Evolution (LTE), LTE-A (Long Term Evolution-Advanced), and the like).

The wireless signal may include various types of data depending on a voice call signal, a video call signal, or a text / multimedia message transmission / reception.

The wireless Internet module 113 refers to a module for wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), High Speed Uplink Packet Access (HSUPA), Long Term Evolution (LTE), LTE-advanced (LTE-A) and the like. The wireless Internet module 113 may transmit/receive data according to one or more of such wireless Internet technologies, and other Internet technologies as well.

When the wireless Internet access is implemented according to, for example, WiBro, HSDPA, HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

Here, another electronic device may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of at least part of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position (or current position) of the mobile terminal 100. As an example, the location information module 115 includes a Global Position System (GPS) module, a Wi-Fi module, or both. For example, when the mobile terminal 100 uses a GPS module, a position of the mobile terminal 100 may be acquired using a signal sent from a GPS satellite. As another example, when the mobile terminal 100 uses the Wi-Fi module, a position of the mobile terminal 100 may be acquired based on information related to a wireless access point (AP) which transmits or receives a wireless signal to or from the Wi-Fi module. If desired, the location information module 115 may alternatively or additionally perform a function of any of the other modules of the wireless communication unit 110 to obtain data related to the position of the mobile terminal 100. The location information module 115 is a module used for acquiring the position (or the current position) of the mobile terminal 100, and may not be limited to a module for directly calculating or acquiring the position of the electronic device.

Next, the input unit 120 is for inputting image information (or signal), audio information (or signal), data, or information input from a user. For inputting image information, the mobile terminal 100 may be provided with a plurality of cameras 121. Such cameras 121 may process image frames of still pictures or video obtained by image sensors in a video or image capture mode. The processed image frames can be displayed on the display unit 151 or stored in memory 170. Meanwhile, the cameras 121 provided in the mobile terminal 100 may be arranged in a matrix configuration to permit a plurality of image information having various angles or focal points to be input to the mobile terminal 100. Also, the cameras 121 may be located in a stereoscopic arrangement to acquire left and right images for implementing a stereoscopic image.

The microphone 122 processes an external audio signal into electric audio (sound) data. The processed audio data can be processed in various manners according to a function being executed in the mobile terminal 100. If desired, the microphone 122 may include assorted noise removing algorithms to remove unwanted noise generated in the course of receiving the external audio signal.

The user input unit 123 is a component that permits input by a user. Such user input may enable the controller 180 to control operation of the mobile terminal 100. The user input unit 123 may include one or more of a mechanical input element (for example, a mechanical key, a button located on a front and/or rear surface or a side surface of the mobile terminal 100, a dome switch, a jog wheel, a jog switch, and the like), or a touch-sensitive input element, among others. As one example, the touch-sensitive input element may be a virtual key, a soft key or a visual key, which is displayed on a touch screen through software processing, or a touch key which is located on the electronic device at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal 100, surrounding environment information of the mobile terminal 100, user information, or the like, and generates a corresponding sensing signal. The controller 180 generally cooperates with the sending unit 140 to control operations of the mobile terminal 100 or execute data processing, a function or an operation associated with an application program installed in the mobile terminal based on the sensing signal. The sensing unit 140 may be implemented using any of a variety of sensors, some of which will now be described in more detail.

The proximity sensor 141 refers to a sensor to sense presence or absence of an object approaching a surface, or an object located near a surface, by using an electromagnetic field, infrared rays, or the like without a mechanical contact. The proximity sensor 141 may be arranged at an inner region of the mobile terminal 100 covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like). In general, the controller 180 may process data corresponding to proximity touches and proximity touch patterns sensed by the proximity sensor 141, and cause visual information corresponding to the processed data to be output on the touch screen. In addition, the controller 180 can control the mobile terminal 100 to execute different operations or process different data (or information) according to whether a touch with respect to a point on the touch screen is either a proximity touch or a contact touch.

A touch sensor can sense a touch (or a touch input) applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the touch screen, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

Meanwhile, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize location information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121, which has been depicted as a component of the input unit 120, typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the object in vicinity of the touch screen. In more detail, the photo sensor may include photo diodes and transistors (TRs) at rows and columns to scan content received at the photo sensor using an electrical signal which changes according to the quantity of applied light. Namely, the photo sensor may calculate the coordinates of the physical object according to variation of light to thus obtain location information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

Also, the display unit 151 may be implemented as a stereoscopic display unit for displaying stereoscopic images.

A typical stereoscopic display unit may employ a stereoscopic display scheme such as a stereoscopic scheme (a glass scheme), an auto-stereoscopic scheme (glassless scheme), a projection scheme (holographic scheme), or the like.

The audio output module 152 may receive audio data from the wireless communication unit 110 or output audio data stored in the memory 170 during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceives, or otherwise experiences. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 may output a signal for indicating an event generation using light of a light source of the mobile terminal 100. Examples of events generated in the mobile terminal 100 may include message reception, call signal reception, a missed call, an alarm, a schedule notice, an email reception, information reception through an application, and the like.

A signal output by the optical output module 154 may be implemented in such a manner that the mobile terminal 100 emits monochromatic light or light with a plurality of colors to a front or rear surface. The signal output may be terminated as the mobile terminal 100 senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the mobile terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal therethrough. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a flash memory type, a hard disk type, a solid state disk (SSD) type, a silicon disk drive (SDD) type, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control operations relating to application programs and the general operations of the mobile terminal 100. For example, the controller 180 may set or release a lock state for restricting a user from inputting a control command with respect to applications when a status of the mobile terminal 100 meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provides internal power and supply the appropriate power required for operating respective elements and components included in the wearable device 100 under the control of the controller 180. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

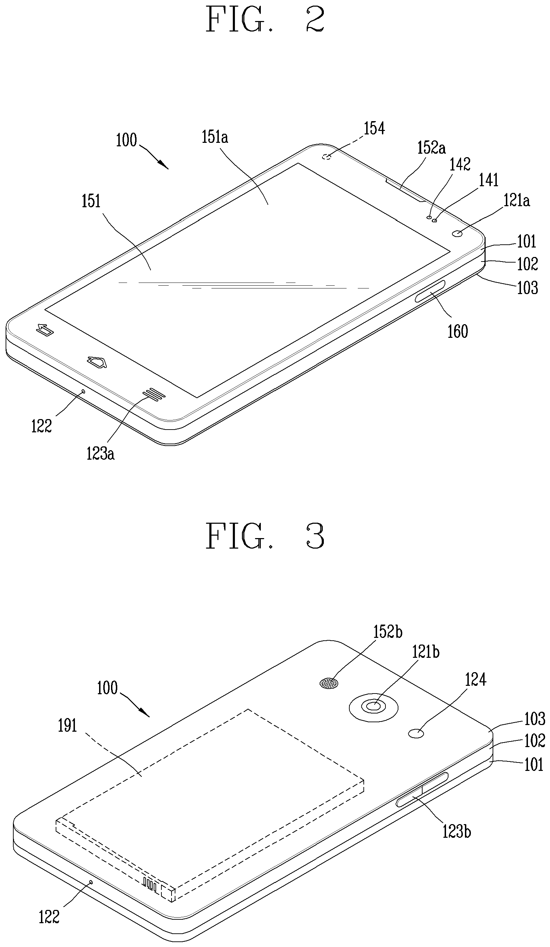

Hereinafter, an embodiment of the mobile terminal 100 having the above-described configurations will be described with reference to FIGS. 2 and 3.

Referring to FIGS. 2 and 3, the mobile terminal 100 includes a bar-like terminal body. However, the mobile terminal 100 may alternatively be implemented in any of a variety of different configurations. Examples of such configurations include watch type, clip-type, glasses-type, or a folder-type, flip-type, slide-type, swing-type, and swivel-type in which two and more bodies are combined with each other in a relatively movable manner, and combinations thereof. Discussion herein will often relate to a particular type of mobile terminal. However, such teachings with regard to a particular type of mobile terminal will generally be applied to other types of mobile terminals as well.

Here, considering the mobile terminal 100 as at least one assembly, the terminal body may be understood as a conception referring to the assembly.

The mobile terminal 100 will generally include a case (for example, frame, housing, cover, and the like) forming the appearance of the terminal. In this embodiment, the case is formed using a front case 101 and a rear case 102. Various electronic components are interposed into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. In this case, a rear cover 103 is shown covering the electronic components, and this cover may be detachably coupled to the rear case 102. Therefore , when the rear cover 103 is detached from the rear case 102, the electronic components mounted on the rear case 102 are exposed to the outside.

As illustrated, when the rear cover 103 is coupled to the rear case 102, a side surface of the rear case 102 may partially be exposed. In some cases, upon the coupling, the rear case 102 may also be completely shielded by the rear cover 103. Meanwhile, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this case, a mobile terminal 100 having a uni-body is formed in such a manner that synthetic resin or metal extends from a side surface to a rear surface.

Meanwhile, the mobile terminal 100 may include a waterproofing unit (not shown) for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

The mobile terminal 100 may include a display unit 151, first and second audio output module 152a and 152b, a proximity sensor 141, an illumination sensor 142, an optical output module 154, first and second cameras 121a and 121b, first and second manipulation units 123a and 123b, a microphone 122, an interface unit 160, and the like.

Hereinafter, as illustrated in FIGS. 1B and 1C, description will be given of the exemplary mobile terminal 100 in which the front surface of the terminal body is shown having the display unit 151, the first audio output module 152a, the proximity sensor 141, the illumination sensor 142, the optical output module 154, the first camera 121a, and the first manipulation unit 121a, the side surface of the terminal body is shown having the second manipulation unit 123b, the microphone 122, and the interface unit 160, and the rear surface of the terminal body is shown having the second audio output module 152b and the second camera 121b.

However, those components may not be limited to the arrangement. Some components may be omitted or rearranged or located on different surfaces. For example, the first manipulation unit 123a may be located on another surface of the terminal body, and the second audio output module 152b may be located on the side surface of the terminal body other than the rear surface of the terminal body.

The display unit 151 is generally configured to output information processed in the mobile terminal 100. For example, the display unit 151 may display execution screen information of an application program executed on the mobile terminal 100 or user interface (UI) and graphic user interface (GUI) information in response to the execution screen information.

The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, according to the configuration type thereof. For instance, a plurality of the display units 151 may be arranged on one side, either spaced apart from each other, or these devices may be integrated, or these devices may be arranged on different surfaces.

The display unit 151 may include a touch sensor that senses a touch with respect to the display unit 151 so as to receive a control command in a touch manner. Accordingly, when a touch is applied to the display unit 151, the touch sensor may sense the touch, and a controller 180 may generate a control command corresponding to the touch. Contents input in the touch manner may be characters, numbers, instructions in various modes, or a menu item that can be designated.

On the other hand, the touch sensor may be configured in a form of a film having a touch pattern and disposed between a window and a display (not illustrated) on a rear surface of the window, or may be a metal wire directly patterned on the rear surface of the window. Alternatively, the touch sensor may be formed integrally with the display. For example, the touch sensor may be disposed on a substrate of the display, or may be provided inside the display.

In this way, the display unit 151 may form a touch screen together with the touch sensor, and in this case, the touch screen may function as the user input unit (123, see FIG. 1A). In some cases, the touch screen may replace at least some of functions of a first manipulation unit 123a. Hereinafter, for the sake of explanation, the display unit (display module) for outputting the image and the touch sensor are collectively referred to as a touch screen 151.

The first audio output module 152a may be implemented as a receiver for transmitting a call sound to a user's ear and the second audio output module 152b may be implemented as a loud speaker for outputting various alarm sounds or multimedia playback sounds.

The window 151a of the display unit 151 may include a sound hole for emitting sounds generated from the first audio output module 152a. However, the present invention is not limited thereto, and the sounds may be released along an assembly gap between the structural bodies (for example, a gap between the window 151a and the front case 101). In this case, a hole independently formed to output audio sounds may not be seen or may otherwise be hidden in terms of appearance, thereby further simplifying the appearance of the mobile terminal 100.

The optical output module 154 may be configured to output light for indicating an event generation. Examples of such events may include a message reception, a call signal reception, a missed call, an alarm, a schedule alarm, an email reception, information reception through an application, and the like. When a user has checked a generated event, the controller 180 may control the optical output module 154 to stop the light output.

The first camera 121a may process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion. The first and second manipulation units 123a and 123b may employ any method if it is a tactile manner allowing the user to perform manipulation with a tactile feeling such as touch, push, scroll or the like The first and second manipulation units 123a and 123b may also be manipulated through a proximity touch, a hovering touch, and the like, without a user's tactile feeling.

The drawings are illustrated on the basis that the first manipulation unit 123a is a touch key, but the present disclosure may not be necessarily limited to this. For example, the first manipulation unit 123a may be configured with a mechanical key, or a combination of a touch key and a push key.

The content received by the first and second manipulation units 123a and 123b may be set in various ways. For example, the first manipulation unit 123a may be used by the user to input a command such power on/off, start, end, switching to a touch recognition mode of the display unit 151 or the like, and the second manipulation unit 123b may be used by the user to input a command, such as controlling a volume level being output from the first or second audio output module 152a or 152b, switching into a touch recognition mode of the display unit 151, or the like.

The first manipulation unit 123a may be disposed to overlap the display unit 151 of the front surface in a thickness direction of the terminal body. As one example, the first manipulation unit 123a may be disposed on an upper end portion of the rear surface of the terminal body such that the user can easily manipulate it using a forefinger when the user grabs the terminal body with one hand. However, the present invention may not be limited to this, and the position of the first manipulation unit 123a may be changeable.

When the first manipulation unit 123a is disposed on the rear surface of the terminal body, a new user interface may be implemented using the first manipulation unit 123a. In addition, the display unit 151 may be configured as a larger screen.

On the other hand, the mobile terminal 100 may include a finger scan sensor which scans a user's fingerprint. The controller 180 may use fingerprint information sensed by the finger scan sensor as an authentication means. The finger scan sensor may be installed in the display unit 151 or the user input unit 123.

The microphone 122 may be configured to receive the user's voice, other sounds, and the like. The microphone 122 may be provided at a plurality of places, and configured to receive stereo sounds.

The interface unit 160 may serve as a path allowing the mobile terminal 100 to interface with external devices. For example, the interface unit 160 may be at least one of a connection terminal for connecting to another device (for example, an earphone, an external speaker, or the like), a port for near field communication (for example, an Infrared DaAssociation (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b may be further mounted to the rear surface of the terminal body. The second camera 121b may have an image capturing direction, which is substantially opposite to the direction of the first camera unit 121a.

The second camera 121b may include a plurality of lenses arranged along at least one line. The plurality of lenses may be arranged in a matrix form. The cameras may be referred to as an 'array camera.' When the second camera 121b is implemented as the array camera, images may be captured in various manners using the plurality of lenses and images with better qualities may be obtained.

The flash 124 may be disposed adjacent to the second camera 121b. When an image of a subject is captured with the camera 121b, the flash 124 may illuminate the subject.

The second audio output module 152b may further be disposed on the terminal body. The second audio output module 152b may implement stereophonic sound functions in conjunction with the first audio output module 152a, and may be also used for implementing a speaker phone mode for call communication.

At least one antenna for wireless communication may be disposed on the terminal body. The antenna may be embedded in the terminal body or formed in the case. For example, an antenna which configures a part of the broadcast receiving module 111 (see FIG. 1A) may be retractable into the terminal body. Alternatively, an antenna may be formed in a form of film to be attached onto an inner surface of the rear cover 103 or a case including a conductive material may serve as an antenna.

The terminal body is provided with a power supply unit 190 (see FIG. 1A) for supplying power to the mobile terminal 100. The power supply unit 190 may include a batter 191 which is mounted in the terminal body or detachably coupled to an outside of the terminal body.

The battery 191 may receive power via a power cable connected to the interface unit 160. Also, the battery 191 may be (re)chargeable in a wireless manner using a wireless charger. The wireless charging may be implemented by magnetic induction or electromagnetic resonance.

On the other hand, the drawing illustrates that the rear cover 103 is coupled to the rear case 102 for shielding the battery 191, so as to prevent separation of the battery 191 and protect the battery 191 from an external impact or foreign materials. When the battery 191 is detachable from the terminal body, the rear case 103 may be detachably coupled to the rear case 102.

An accessory for protecting an appearance or assisting or extending the functions of the mobile terminal 100 may further be provided on the mobile terminal 100. As one example of the accessory, a cover or pouch for covering or accommodating at least one surface of the mobile terminal 100 may be provided. The cover or pouch may cooperate with the display unit 151 to extend the function of the mobile terminal 100. Another example of the accessory may be a touch pen for assisting or extending a touch input onto a touch screen.

Meanwhile, a piezoelectric actuator 153a is provided in the mobile terminal 100 of the present invention to apply vibration to the mobile terminal 100 or sense a force applied to the mobile terminal 100. The piezoelectric actuator 153a can be understood as one example of the haptic module 153.

A structure in which the piezoelectric actuator 153a is disposed together with the fingerprint sensor 143 will now be described.

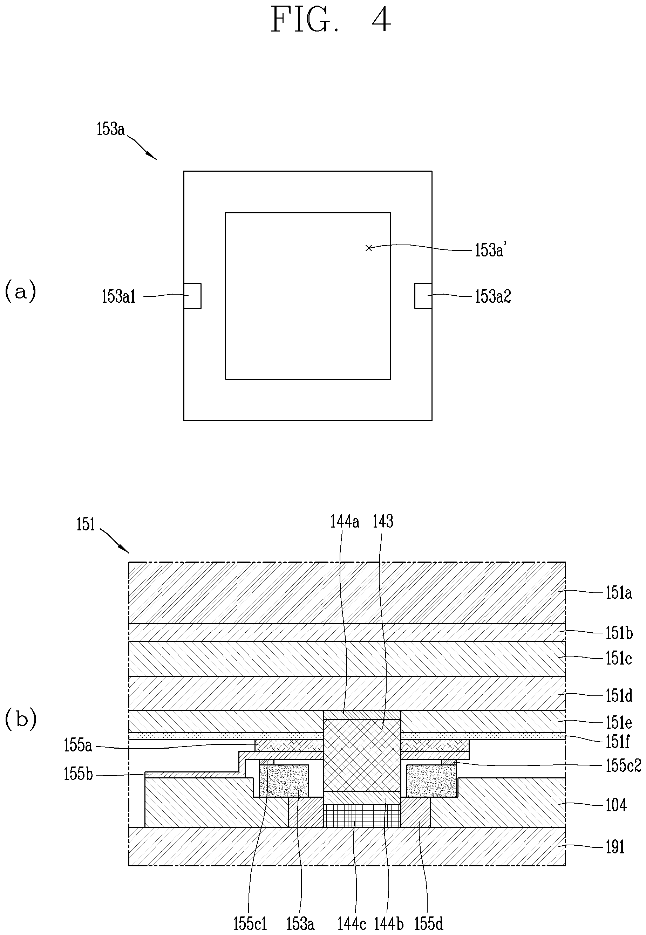

FIG. 4 (a) is a plan view showing one example of the piezoelectric actuator 153a applied to the mobile terminal 100 of the present invention, and FIG. 4 (b) is a concept view showing a structure in which the piezoelectric actuator 153a of FIG. 4 (a) is disposed together with the fingerprint sensor 143.

Referring to FIG. 4 (a), the piezoelectric actuator 153a is formed in an annular shape with a hollow portion 153a'. As shown, the piezoelectric actuator 153a may be formed in a square pillar shape, and the hollow portion 153a' may also be formed in a square shape.

First and second electrodes 153a1 and 153a2 for electrical connection may be provided on the top surface of the piezoelectric actuator 153a. The first and second electrodes 153a1 and 153a2 can be understood as +/- electrodes, respectively. In the drawing, the first and second electrodes 153a1 and 153a2 are disposed on the two top surfaces disposed in parallel, with the hollow portion 153a' therebetween, of the four top surfaces of the piezoelectric actuator 153a disposed orthogonal to each other.

As shown, the first and second electrodes 153a1 and 153a2 may be formed in mutual positions relative to the center of the piezoelectric actuator 153a. Alternatively, the first and second electrodes 153a1 and 153a2 may be formed in mutual asymmetric positions relative to the center of the piezoelectric actuator 153a so that they can be easily distinguished from each other.

Referring to FIG. 4 (b), the piezoelectric actuator 153a is positioned on the underside of the display part 151. That is, the piezoelectric actuator 153a is disposed to overlap with the display part 151 in the thickness direction of the mobile terminal 100. With this arrangement, the piezoelectric actuator 153a is configured to transfer vibration to the display part 151 or sense a force applied to the display part 151.

The fingerprint sensor 143 is received in the hollow portion 153a' of the piezoelectric actuator 153a. That is, the fingerprint sensor 143 is also positioned on the underside of the display part 151. That is, the fingerprint sensor 143 is disposed to overlap with the display part 151 in the thickness direction of the mobile terminal 100 so as to sense a fingerprint of a finger brought into contact with the display part 151 on the fingerprint sensor 143.

The fingerprint sensor 143 may be operated in a ultrasonic manner or optical manner. Taking into account the structure in which the fingerprint sensor 143 is disposed on the underside of the display part 151, it is preferable for this structure to be applied to the OLED display 151d. If the fingerprint sensor 143 is disposed on the underside of the LCD display 151d, reflection or refraction of light or refraction or interception of ultrasonic waves may occur due to the LCD inner structure.

In the drawing, the display part 151 includes a window 151a and the OLED display 151d.

The window 151a is formed in a light-transmitting type to define one surface of the mobile terminal 100 (the front surface in the drawing). The window 151a may be made of a glass material, a synthetic resin material, etc.

The display part 151 may include a light-transmitting region R1 (see FIG. 2) corresponding to the OLED display 151d and a light-blocking region R2 (see FIG. 2) surrounding the light-transmitting region R1. In order to define the light-transmitting region R1 and the light-blocking region R2, a deco layer 151b may be disposed on one surface of the window 151a.

The deco layer 151b is made of a light-blocking material and printed on the underside of the window 151a to define the light-blocking region R2. Alternatively, the deco layer 151b may be formed in a film type and attached to one surface of the window 151a. For example, the film-type deco layer 151b may include a light-transmitting portion for defining the light-transmitting region R1 and a light-blocking portion for defining the light-blocking region R2.

Hereinafter, for convenience, the window 151a with the deco layer 151b formed or attached thereon is referred to as a window part.

The OLED display 151d is disposed on the underside of the window part to output visual information through the window part. Here, examples of the OLED display 151d may include a typical OLED display as well as a plastic OLED display 151d.

The OLED display 151d may be attached to the underside of the window part. For the attachment, a light-transmitting adhesive layer 151c, for example, an optically clear adhesive (OCA) or an optically clear resin (OCR) may be disposed between the OLED display 151d and the window part.

A buffer sheet 151e may be attached to the underside of the OLED display 151d. The buffer sheet 151e can protect the OLED display 151d from external shocks. As an example, the buffer sheet 151e may be made of a polyurethane material and formed in a foam type.

A thermal sheet 151f may be attached to the underside of the buffer sheet 151e to diffuse heat generated in the OLED display 151d. The thermal sheet 151f may be made of a material with high thermal conductivity, such as graphite, copper, aluminum, etc.

The fingerprint sensor 143 and the piezoelectric actuator 153a are disposed on the underside of the display part 151. The fingerprint sensor 143 and the piezoelectric actuator 153a may be disposed to overlap with the aforementioned light-transmitting region R1 in the thickness direction of the mobile terminal 100.

As the fingerprint sensor 143 is operated in a ultrasonic manner or optical manner to sense a fingerprint of a finger brought into contact with the window 151a, a structure causing reflection or refraction of light or refraction or interception of ultrasonic waves should not be interposed between the window 151a and the fingerprint sensor 143.

Therefore, it is preferable for the fingerprint sensor 143 to be attached to the underside of the OLED display 151d. For the attachment, a light-transmitting adhesive layer 144a, for example, an optically clear adhesive (OCA) or an optically clear resin (OCR) may be disposed between the OLED display 151d and the fingerprint sensor 143.

With this arrangement, portions of the aforementioned buffer sheet 151e and thermal sheet 151f that correspond to the fingerprint sensor 143 may be cut out. That is, the fingerprint sensor 143 may be received in the cutout portions and surrounded by the buffer sheet 151e and the thermal sheet 151f. It is preferable for the contours of the cutout portions to correspond to the contour of the fingerprint sensor 143. For example, if the fingerprint sensor 143 is formed in a square pillar shape, the cutout portions may be formed in a square shape.

The fingerprint sensor 143 may be electrically connected to the controller 180 through an FPCB 144b. In the drawing, the FPCB 144b is disposed on the underside of the fingerprint sensor 143.

The fingerprint sensor 143 may be supported by the frame 104 or an adjacent component (for example, the battery 191). In the drawing, the fingerprint sensor 143 is supported by the battery 191. A reinforcement 144c may be disposed between the fingerprint sensor 143 and the battery 191. The reinforcement 144c may be attached to the underside of the FPCB 144b.

The piezoelectric actuator 153a is formed in an annular shape to surround the fingerprint sensor 143. It is preferable for the contour of the hollow portion 153a' for receiving the fingerprint sensor 143 to correspond to the contour of the fingerprint sensor 143. For example, if the fingerprint sensor 143 is formed in a square pillar shape, the hollow portion 153a' may be formed in a square shape.

The piezoelectric actuator 153a is attached to the underside of the thermal sheet 151f to transfer vibration to the display part 151 or sense a force applied to the display part 151.

The first and second electrodes 153a1 and 153a2 are disposed on the top surface of the piezoelectric actuator 153a, respectively. The first and second electrodes 153a1 and 153a2 may be disposed on the both-side top surfaces relative to the hollow portion 153a, respectively. The first and second electrodes 153a1 and 153a2 are electrically connected to the controller 180 through a flexible circuit 155b.

The flexible circuit 155b is disposed between the thermal sheet 151f and the piezoelectric actuator 153a and electrically connected to the first and second electrodes 153a1 and 153a2. The flexible circuit 155b is bendable to some extent without being damaged. The flexible circuit 155b may be a conductive foil, a flexible printed circuit (FPC), or a flexible flat cable (FFC).

For the electrical connection of the flexible circuit 155b and the first and second electrodes 153a1 and 153a2, conductive adhesives 155c1 and 155c2 may be disposed between the flexible circuit 155b and the first and second electrodes 153a1 and 153a2. The conductive adhesives 155c1 and 155c2 may be made of various materials such as Ag, Cu, C, etc.

Taking into account the structure in which the first and second electrodes 153a1 and 153a2 are disposed at both sides of the hollow portion 153a', the flexible circuit 155b may be formed in an annular shape to receive the fingerprint sensor 143 in its hollow portion. The contour of the hollow portion of the flexible circuit 155b may correspond to the contour of the hollow portion 153a' of the piezoelectric actuator 153a.

The flexible circuit 155b is attached to the underside of the thermal sheet 151f. For the attachment, an adhesive layer 155a may be disposed between the thermal sheet 151f and the flexible circuit 155b. The adhesive layer 155a may be made of an optically clear adhesive (OCA) or an optically clear resin (OCR) as well as a known adhesive film or adhesive which does not have a light-transmitting characteristic. Because of the attachment, vibration generated in the piezoelectric actuator 153a can be transferred to the window 151a, and pressure applied to the window 151a can be transferred to the piezoelectric actuator 153a.

The piezoelectric actuator 153a may be supported by the frame 104 or an adjacent component (for example, the battery 191). In the drawing, the piezoelectric actuator 153a is supported by the frame 104 in the mobile terminal 100. The frame 104 may be made of a metal material (for example, SUS, aluminum, etc.) or a synthetic resin material.

As shown, the frame 104 may have a hollow portion corresponding to the fingerprint sensor 143. The aforementioned reinforcement 144c may be disposed in the hollow portion, and a damper 155d may be provided to surround the reinforcement 144c. The damper 155d may be formed of a polyurethane material in a foam type.

The damper 155d may be configured to support at least part of the piezoelectric actuator 153a. That is, part of the piezoelectric actuator 153a can be supported by the frame 104 and the other part thereof can be supported by the damper 155d.

As described above, in the structure in which the first and second electrodes 153a1 and 153a2 are provided on the both-side top surfaces of the piezoelectric actuator 153a relative to the hollow portion 153a', the flexible circuit 155b is disposed to cover the both-side top surfaces, without causing a step difference. Therefore, vibration generated in the piezoelectric actuator 153a can be transferred to the window 151a, and pressure applied to the window 151a can be transferred to the piezoelectric actuator 153a, without using a separate component.

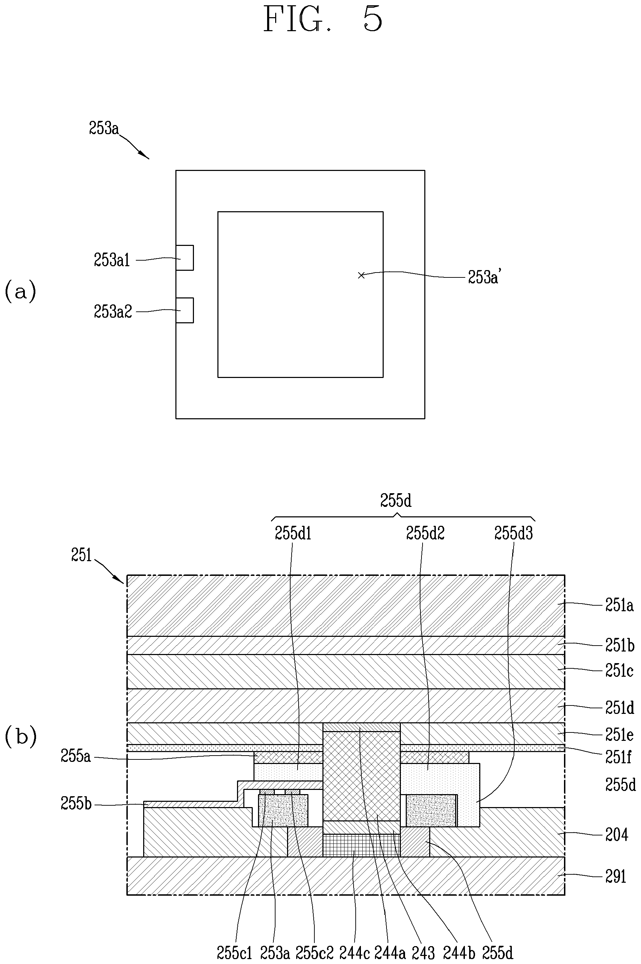

FIG. 5 (a) is a plan view showing another example of a piezoelectric actuator 253a applied to the mobile terminal of the present invention, and FIG. 5 (b) is a concept view showing a structure in which the piezoelectric actuator 253a of FIG. 5 (a) is disposed together with a fingerprint sensor 243.

In this example, first and second electrodes 253a1 and 253a2 are provided on the one-side top surface relative to a hollow portion 253a'. As such, a structure for electrically connecting the piezoelectric actuator 253a to a flexible circuit 255b and a structure for solving a step difference caused by such an electrical connection structure are different from the structure of FIG. 4.

Referring to FIG. 5 (a), the piezoelectric actuator 253a is formed in an annular shape with a hollow portion 253a'. As shown, the piezoelectric actuator 253a may be formed in a square pillar shape, and the hollow portion 253a' may also be formed in a square shape.

The first and second electrodes 253a1 and 253a2 may be provided on the one-side top surface of the piezoelectric actuator 253a. In the drawing, the first and second electrodes 253a1 and 253a2 are disposed on one of the four top surfaces of the piezoelectric actuator 253a disposed orthogonal to each other.

Referring to FIG. 5 (b), the piezoelectric actuator 253a is positioned on a underside of a display part 251. That is, the piezoelectric actuator 253a is disposed to overlap with the display part 251 in the thickness direction of the mobile terminal. With this arrangement, the piezoelectric actuator 253a is configured to transfer vibration to the display part 251 or sense a force applied to the display part 251.

A fingerprint sensor 243 is received in the hollow portion 253a' of the piezoelectric actuator 253a. That is, the fingerprint sensor 243 is also positioned on the underside of the display part 251. That is, the fingerprint sensor 243 is disposed to overlap with the display part 251 in the thickness direction of the mobile terminal so as to sense a fingerprint of a finger brought into contact with the display part 251 on the fingerprint sensor 243.

The fingerprint sensor 243 may be operated in a ultrasonic manner or optical manner. Taking into account the structure in which the fingerprint sensor 243 is disposed on the underside of the display part 251, it is preferable for this structure to be applied to the OLED display 251d. If the fingerprint sensor 243 is disposed on the underside of the LCD display 251d, reflection or refraction of light or refraction or interception of ultrasonic waves may occur due to the LCD inner structure.

In the drawing, the display part 251 includes a window 251a and the OLED display 251d.

The window 251a is formed in a light-transmitting type to define one surface of the mobile terminal (the front surface in the drawing). The window 251a may be made of a glass material, a synthetic resin material, etc.

The display part 251 may include a light-transmitting region R1 (see FIG. 2) corresponding to the OLED display 251d and a light-blocking region R2 (see FIG. 2) surrounding the light-transmitting region R1. In order to define the light-transmitting region R1 and the light-blocking region R2, a deco layer 251b may be disposed on one surface of the window 251a.

The deco layer 251b is made of a light-blocking material and printed on the underside of the window 251a to define the light-blocking region R2. Alternatively, the deco layer 251b may be formed in a film type and attached to one surface of the window 251a. For example, the film-type deco layer 251b may include a light-transmitting portion for defining the light-transmitting region R1 and a light-blocking portion for defining the light-blocking region R2.

Hereinafter, for convenience, the window 251a with the deco layer 251b formed or attached thereon is referred to as a window part.

The OLED display 251d is disposed on the underside of the window part to output visual information through the window part. Here, examples of the OLED display 251d may include a typical OLED display as well as a plastic OLED display 251d.

The OLED display 251d may be attached to the underside of the window part. For the attachment, a light-transmitting adhesive layer, for example, an optically clear adhesive (OCA) or an optically clear resin (OCR) may be disposed between the OLED display 251d and the window part.

A buffer sheet 251e may be attached to the underside of the OLED display 251d. The buffer sheet 251e can protect the OLED display 251d from external shocks. As an example, the buffer sheet 251e may be made of a polyurethane material and formed in a foam type.

A thermal sheet 251f may be attached to the underside of the buffer sheet 251e to diffuse heat generated in the OLED display 251d. The thermal sheet 251f may be made of a material with high thermal conductivity, such as graphite, copper, aluminum, etc.

The fingerprint sensor 243 and the piezoelectric actuator 253a are disposed on the underside of the display part 251. The fingerprint sensor 243 and the piezoelectric actuator 253a may be disposed to overlap with the aforementioned light-transmitting region R1 in the thickness direction of the mobile terminal.

As the fingerprint sensor 243 is operated in a ultrasonic manner or optical manner to sense a fingerprint of a finger brought into contact with the window 251a, a structure causing reflection or refraction of light or refraction or interception of ultrasonic waves should not be interposed between the window 251a and the fingerprint sensor 243.

Therefore, it is preferable for the fingerprint sensor 243 to be attached to the underside of the OLED display 251d. For the attachment, a light-transmitting adhesive layer, for example, an optically clear adhesive (OCA) or an optically clear resin (OCR) may be disposed between the OLED display 251d and the fingerprint sensor 243.

With this arrangement, portions of the aforementioned buffer sheet 251e and thermal sheet 251f that correspond to the fingerprint sensor 243 may be cut out. That is, the fingerprint sensor 243 may be received in the cutout portions and surrounded by the buffer sheet 251e and the thermal sheet 251f. It is preferable for the contours of the cutout portions to correspond to the contour of the fingerprint sensor 243. For example, if the fingerprint sensor 243 is formed in a square pillar shape, the cutout portions may be formed in a square shape.

The fingerprint sensor 243 may be electrically connected to the controller 180 through an FPCB 244b. In the drawing, the FPCB 244b is disposed on the underside of the fingerprint sensor 243.

The fingerprint sensor 243 may be supported by a frame 204 or an adjacent component (for example, a battery 291). In the drawing, the fingerprint sensor 243 is supported by the battery 291. A reinforcement 244c may be disposed between the fingerprint sensor 243 and the battery 291. The reinforcement 244c may be attached to the underside of the FPCB 244b.

The piezoelectric actuator 253a is formed in an annular shape to surround the fingerprint sensor 243. It is preferable for the contour of the hollow portion 253a' for receiving the fingerprint sensor 243 to correspond to the contour of the fingerprint sensor 243. For example, if the fingerprint sensor 243 is formed in a square pillar shape, the hollow portion 253a' may be formed in a square shape.

The first and second electrodes 253a1 and 253a2 are disposed on the top surface of the piezoelectric actuator 253a, respectively. The first and second electrodes 253a1 and 253a2 may be disposed on the one-side top surface of the hollow portion 253a. The first and second electrodes 253a1 and 253a2 are electrically connected to the controller 180 through a flexible circuit 255b.

The flexible circuit 255b is disposed between the thermal sheet 251f and the piezoelectric actuator 253a and electrically connected to the first and second electrodes 253a1 and 253a2. The flexible circuit 255b is bendable to some extent without being damaged. The flexible circuit 255b may be a conductive foil, a flexible printed circuit (FPC), or a flexible flat cable (FFC).

For the electrical connection of the flexible circuit 255b and the first and second electrodes 253a1 and 253a2, conductive adhesives 255c1 and 255c2 may be disposed between the flexible circuit 255b and the first and second electrodes 253a1 and 253a2. The conductive adhesives 255c1 and 255c2 may be made of various materials such as Ag, Cu, C, etc.

Taking into account the structure in which the first and second electrodes 253a1 and 253a2 are disposed on the one-side top surface relative to the hollow portion 253a', the flexible circuit 255b may be formed to cover only the one-side top surface for the electrical connection to the first and second electrodes 253a1 and 253a2. That is, the flexible circuit 255b may not be disposed on the top surfaces other than the one-side top surface. For example, as shown, if the first and second electrodes 253a1 and 253a2 are provided on one of the four top surfaces of the piezoelectric actuator 253a disposed orthogonal to each other, the flexible circuit 255b may be disposed to cover only the one top surface and not to cover the other three top surfaces.

With this arrangement, a distance from the underside of the thermal sheet 251f to the flexible circuit 255b is different from a distance from the underside of the thermal sheet 251f to the other three top surfaces without the flexible circuit 255b thereon. This difference in distance, i.e., the step difference makes it difficult to attach the flexible circuit 255b to the underside of the thermal sheet 251f, unlike the above embodiment.

Thus, this embodiment discloses a structure in which a vibration transfer member 255d is interposed between the thermal sheet 251f and the piezoelectric actuator 253a. The vibration transfer member 255d may be referred as a bracket because it serves to fix the piezoelectric actuator 253a to the underside of the thermal sheet 251f.

Specifically, the vibration transfer member 255d is formed in an annular shape with a hollow portion to receive the fingerprint sensor 243 therein and disposed to cover the flexible circuit 255b and the three top surfaces of the piezoelectric actuator 253a on which the flexible circuit 255b is not disposed.

The vibration transfer member 255d includes a first portion 255d1 and a second portion 255d2. The first portion 255d1 is disposed between the flexible circuit 255b and the thermal sheet 251f. The second portion 255d2 is extended from the first portion 255d1 and disposed between the piezoelectric actuator 253a and the thermal sheet 251f, with a greater thickness than that of the first portion 255d1. The first portion 255d1 and the second portion 255d2 are formed in an annular shape with the hollow portion 253a' to receive the fingerprint sensor 243 therein.

The vibration transfer member 255d may further include a support portion 255d3 extending downwardly from the second portion 255d2. The support portion 255d3 is supported by the frame 204, which supports the piezoelectric actuator 253a, or an adjacent component. As shown in FIG. 5 (b), the flexible circuit 255b and the support portion 255d3 are disposed at both sides, respectively, with the fingerprint sensor 243 therebetween.

The piezoelectric actuator 253a may be supported by the frame 204 or the adjacent component (for example, the battery 291). In the drawing, the piezoelectric actuator 253a is supported by the frame 204 in the mobile terminal. The frame 204 may be made of a metal material (for example, SUS, aluminum, etc.) or a synthetic resin material.

As shown, the frame 204 may have a hollow portion corresponding to the fingerprint sensor 243. The aforementioned reinforcement 244c may be disposed in the hollow portion, and a damper 255d may be provided to surround the reinforcement 244c. The damper 255d may be formed of a polyurethane material in a foam type.

The damper 255d may be configured to support at least part of the piezoelectric actuator 253a. That is, part of the piezoelectric actuator 253a can be supported by the frame 204 and the other part thereof can be supported by the damper 255d.

The above-described embodiments show a structure in which the FPCB 144b and 244b connected to the fingerprint sensor 143 and 243 and the flexible circuit 155b and 255b connected to the piezoelectric actuator 153a and 253a are separately provided. A structure in which a fingerprint sensor 343 and a piezoelectric actuator 353a are electrically connected to the controller 180 through one FPCB 344b will now be described.

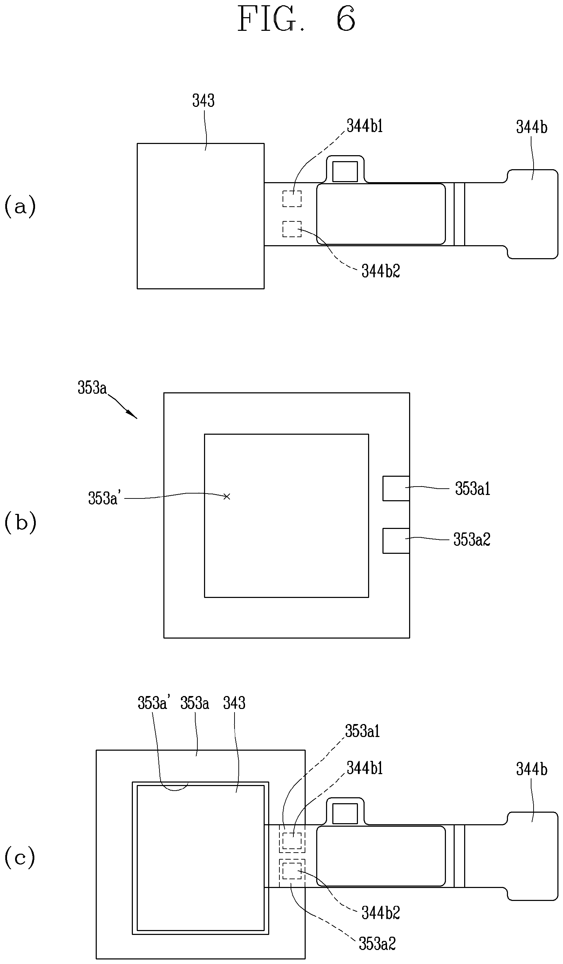

FIG. 6 is a concept view showing a structure in which the piezoelectric actuator 353a applied to the mobile terminal 300 of the present invention is electrically connected to the FPCB 344b of the fingerprint sensor 343.

Referring to FIG. 6, the fingerprint sensor 343 is electrically connected to the controller 180 through the FPCB 344b. The FPCB 344b is extended from one side of the fingerprint sensor 343.

The piezoelectric actuator 353a is formed in an annular shape to surround the fingerprint sensor 343. It is preferable for the contour of the hollow portion 353a' for receiving the fingerprint sensor 343 to correspond to the contour of the fingerprint sensor 343. For example, if the fingerprint sensor 343 is formed in a square pillar shape, the hollow portion 353a' may be formed in a square shape.

First and second electrodes 353a1 and 353a2 are provided on the one-side top surface of the piezoelectric actuator 353a, respectively. The first and second electrodes 353a1 and 353a2 may be disposed on the one-side top surface relative to the hollow portion 353a'. The first and second electrodes 353a1 and 353a2 are electrically connected to the controller 180 through a flexible circuit 355b.

When the fingerprint sensor 343 is received in the hollow portion 353a' of the piezoelectric actuator 353a, the FPCB 344b is extended in the lateral direction of the piezoelectric actuator 353a past the one-side top surface thereof. Here, the first and second electrodes 353a1 and 353a2 are provided on the one-side top surface, and first and second terminals 344b1 and 344b2 for the electrical connection to the first and second electrodes 353a1 and 353a2 are provided on the underside of the FPCB 344b that faces the one-side top surface.

In other words, when the fingerprint sensor 343 is received in the hollow portion 353a' of the piezoelectric actuator 353a, the first terminal 344b1 is disposed to face the first electrode 353a1 and the second terminal 344b2 is disposed to face the second electrode 353a2. For the electrical connection of the first and second electrodes 353a1 and 353a2 to the first and second terminals 344b1 and 344b2, a conductive adhesive (not shown) may be disposed therebetween. The conductive adhesive may be made of various materials such as Ag, Cu, C, etc.

With this structure, the fingerprint sensor 343 and the piezoelectric actuator 353a can be electrically connected to the controller 180 through one FPCB 344b. Therefore, the flexible circuit 355b for the electrical connection of the piezoelectric actuator 353a is not necessary, which makes the structure for electrical connection more simple.

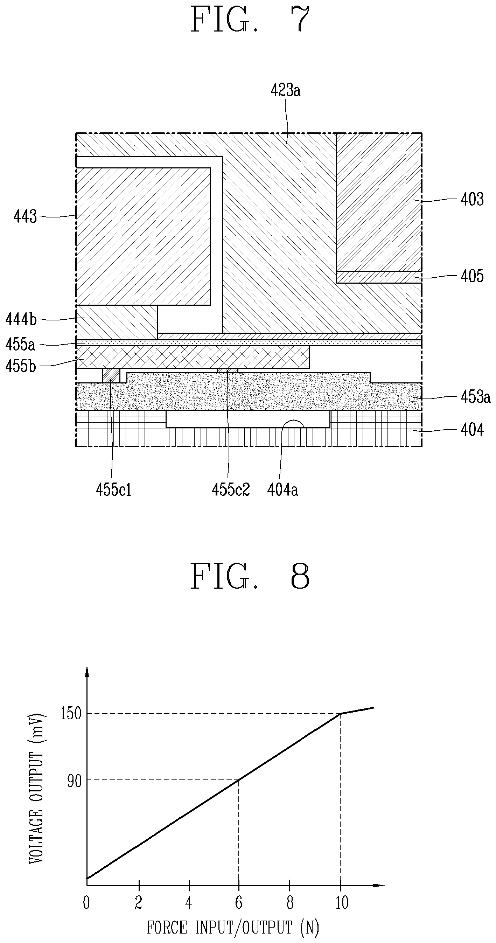

FIG. 7 is a concept view showing a structure in which a piezoelectric actuator 453a is applied to an operation unit applied to the mobile terminal of the present invention.

As described above in relation to FIG. 3, the display part 151 for outputting visual information is provided on the front surface of the mobile terminal 100, and the first operation unit 123a is provided on the rear surface thereof. FIG. 7 shows a structure in which the piezoelectric actuator 453a is applied to the first operation unit 123a.

Referring to FIG. 7, the first operation unit 123a may be referred to as a rear key 423a in consideration of its position. The rear key 423a may also be referred to as a type of key in that it provides a user with a similar haptic effect to that of a mechanical button, although it is not a typical push-type mechanical button.

The rear key 423a is configured to sense a fingerprint of a user and to transfer vibration to the user or sense a force applied by the user. The rear key 423a is exposed to the rear surface of the mobile terminal and disposed to overlap with the display part in the thickness direction of the mobile terminal.

A fingerprint sensor 443 may be built in the rear key 423a. The fingerprint sensor 443 may be operated in a ultrasonic manner or optical manner. The fingerprint sensor 443 may be electrically connected to the controller 180 through an FPCB 444b.

It is preferable for the rear key 423a to be made of a light-transmitting material to reduce reflection or refraction of light or refraction or interception of ultrasonic waves when the fingerprint sensor 443 recognizes the fingerprint of the finger brought into contact with the rear key 423a. The rear key 423a may be made of a glass material, a synthetic resin material, etc.

The piezoelectric actuator 453a is disposed on the underside of the rear key 423a to transfer vibration to the rear key 423a or sense a force applied to the rear key 423a. The piezoelectric actuator 453a may be formed in various shapes. That is, the piezoelectric actuator 453a is not always formed in an annular shape as in the above-described embodiments. In the drawing, the piezoelectric actuator 453a does not have a hollow portion, first and second electrodes being provided on the top surface thereof.

The piezoelectric actuator 453a may be supported by a frame 404 or an adjacent component (for example, a battery). In the drawing, the piezoelectric actuator 453a is supported by the frame 404. The frame 404 may be made of a metal material (for example, SUS, aluminum, etc.) or a synthetic resin material.

A recess portion 404a is formed in the top surface of the frame 404 for supporting the piezoelectric actuator 453a. When the piezoelectric actuator 453a is supported on the top surface of the frame 404, the recess portion 404a defines a cavity with the underside of the piezoelectric actuator 453a. The cavity serves to secure a deformable space of the piezoelectric actuator 453a and suppress transfer of vibration in the rearward direction, i.e., to the underside of the frame 404, upon vibration of the piezoelectric actuator 453a.

Accordingly, the depth of the recess portion 404a should be designed in consideration of the downward displacement amount of the piezoelectric actuator 453a upon vibration of the piezoelectric actuator 453a. For example, the recess portion 404a may be designed to have a depth such that it does not contact the piezoelectric actuator 453a when the displacement amount of the piezoelectric actuator 453a is maximum.

In this structure, the rear key 423a, the piezoelectric actuator 453a and the recess portion 404a of the frame 404 are disposed to overlap with each other in the thickness direction of the mobile terminal.

The piezoelectric actuator 453a is attached to the underside of the rear key 423a to transfer vibration to the rear key 423a or sense a force applied to the rear key 423a.

First and second electrodes are disposed on the piezoelectric actuator 453a, respectively. For example, the first and second electrodes may be provided on the top surface of the piezoelectric actuator 453a. In this case, the first and second electrodes may be formed on the same plane, or on the two top surfaces of different heights, respectively, as shown.

The first and second electrodes are electrically connected to the controller 180 through a flexible circuit 455b. The flexible circuit 455b is disposed between the rear key 423a and the piezoelectric actuator 453a and electrically connected to the first and second electrodes.

The flexible circuit 455b is bendable to some extent without being damaged. The flexible circuit 455b may be a conductive foil, a flexible printed circuit (FPC), or a flexible flat cable (FFC).

For the electrical connection of the flexible circuit 455b and the first and second electrodes, conductive adhesives 455c1 and 455c2 may be disposed between the flexible circuit 455b and the first and second electrodes. The conductive adhesives 455c1 and 455c2 may be made of various materials such as Ag, Cu, C, etc.

The flexible circuit 455b is attached to the underside of the rear key 423a. For the attachment, an adhesive layer 455a may be disposed between the rear key 423a and the flexible circuit 455b. The adhesive layer 455a may be made of an optically clear adhesive (OCA) or an optically clear resin (OCR) as well as a known adhesive film or adhesive which does not have a light-transmitting characteristic. Because of the attachment, vibration generated in the piezoelectric actuator 453a can be transferred to the rear key 423a, and pressure applied to the rear key 423a can be transferred to the piezoelectric actuator 453a.

FIG. 8 is a concept view showing the force-voltage characteristics of the piezoelectric actuator 153a.

The piezoelectric actuator 153a has a characteristic that a potential difference (voltage) is generated when a force is applied thereto, and on the contrary, physical displacement (vibration) occurs when a potential difference (voltage) is applied thereto. The piezoelectric actuator 153a may be made of quartz, Rochelle salt, barium titanate, artificial ceramic, etc.

As seen from the graph of FIG. 8, the force and voltage exhibit linear characteristics within a certain range. With these characteristics, the controller 180 can sense the intensity of the applied force based on the generated potential difference and control the voltage (or current) applied to the piezoelectric actuator 153a to regulate the intensity of the vibration.

For example, when a force of 6 N is applied to the piezoelectric actuator 153a, a voltage of 90 mV is generated. Therefore, the controller can sense the voltage generated in the piezoelectric actuator 153a to calculate the force applied to the piezoelectric actuator 153a.

Meanwhile, when a voltage of 90 mV is applied to the piezoelectric actuator 153a, a force of 6 N is generated. Thus, the controller can control the voltage applied to the piezoelectric actuator 153a to regulate the intensity of the vibration.

Combining the piezoelectric actuator 153a having these characteristics with the fingerprint sensor 143 can provide a novel user interface.

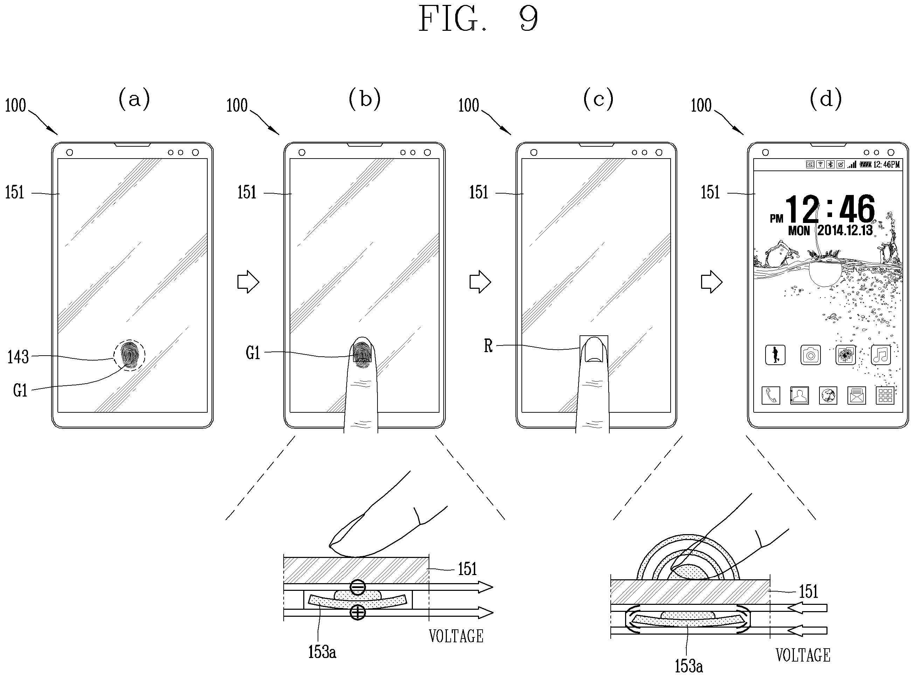

FIG. 9 is a concept view showing one example of a method of controlling the mobile terminal 100 using the piezoelectric actuator 153a and the fingerprint sensor 143.

Referring to FIG. 9 together with FIG. 8, the controller 180 is configured to control the driving of the display part 151 based on the force applied to the display part 151 sensed by the piezoelectric actuator 153a and on the fingerprint sensed by the fingerprint sensor 143.

In FIG. 9 (a), when the mobile terminal 100 enters a sleep mode, the display part 151 is also put into the sleep mode to reduce power consumption. The sleep mode can be understood as a power saving mode, a low power mode, a standby mode, etc.

In the sleep mode of the display part 151, the display part 151 is turned off or set to output only the preset visual information. As an example, a graphic object G1 for indicating the position of the user's finger for fingerprint recognition may be displayed on the display part 151. It is preferable for the graphic object G1 to be positioned above the fingerprint sensor 143, i.e., to overlap with the fingerprint sensor 143 in the thickness direction of the mobile terminal 100.

It is noted that the fingerprint sensor 143 may be received in the hollow portion of the piezoelectric actuator 153a, as described above. That is, the piezoelectric actuator 153a may be disposed to surround the fingerprint sensor 143.

Here, as shown in FIGS. 9B and 9C, when the user puts his/her finger on a portion of the display part 151 having the graphic object G1 displayed thereon, that graphic object G1-displayed portion is contacted and pressed. The controller 180 uses the touch sensor and the piezoelectric actuator 153a to sense that the graphic object G1-displayed portion has been contacted and pressed and controls the display part 151 based on the sensing result.

For example, when the touch sensor of the display part 151 senses that the graphic object G1-displayed portion has been contacted and the piezoelectric actuator 153a senses that the display part 151 has been pressed above a preset force, the controller 180 may switch a first region of the display part 151 into the on state, for fingerprint recognition. Therefore, when portions other than the graphic object G1-displayed portion are contacted and pressed, the controller 180 does not switch at least some portion of the display part 151 into the on state.

The first region switched into the on state may include the graphic object G1-displayed portion. That is, the display part 151 supplies light to the graphic object G1-displayed portion so that the fingerprint sensor 143 can recognize the fingerprint of the finger brought into contact with the graphic object G1-displayed portion. In order to supply light to the first region as described, it is preferable for the display part 151 to include the OLED display 151d.

In turn, as shown in FIG. 9 (d), when the fingerprint sensed by the fingerprint sensor 143 corresponds to the preset fingerprint, the controller 180 switches a second region of the display part 151 into the on state. Here, the second region may include the first region and may be larger than the first region. As an example, the second region may be the entire region of the display part 151.

As the second region of the display part 151 is switched into the on state, the display part 151 is switched from the sleep mode to a driving mode. Further, the mobile terminal 100 is also switched from the sleep mode to the driving mode.

The controller 180 may be configured to transfer vibration to the display part 151 through the piezoelectric actuator 153a, when the second region of the display part 151 is switched into the on state. To this end, the controller 180 can change a voltage applied to the piezoelectric actuator 153a.

When the fingerprint sensed by the fingerprint sensor 143 does not correspond to the preset fingerprint, the controller 180 maintains the display part 151 in the sleep mode. In this case, the display part 151 may output visual information indicating that the sensed fingerprint does not correspond to the preset fingerprint.

Meanwhile, the controller 180 can control a voltage applied to the piezoelectric actuator 153a based on the fingerprint sensed by the fingerprint sensor 143. That is, the controller 180 can change a voltage so that the piezoelectric actuator 153a can generate different patterns of vibration depending on the fingerprint recognition results.

For example, when the fingerprint sensed by the fingerprint sensor 143 corresponds to the preset fingerprint, the controller 180 may apply a first pattern voltage to the piezoelectric actuator 153a to apply first pattern vibration to the display part 151. On the contrary, when the fingerprint sensed by the fingerprint sensor 143 does not correspond to the preset fingerprint, the controller 180 may apply a second pattern voltage to the piezoelectric actuator 153a to apply second pattern vibration to the display part 151. Here, the first pattern voltage is different from the second pattern voltage, and the first pattern vibration is different from the second pattern vibration.

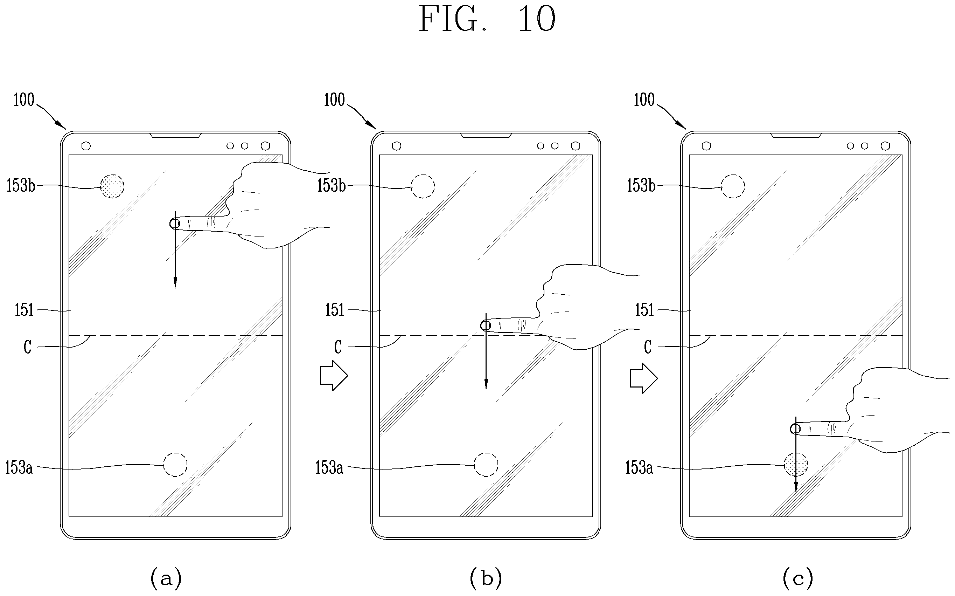

FIG. 10 is a concept view showing one example of a method of controlling the mobile terminal 100 using a plurality of vibration elements 153a and 153b.

Referring to FIG. 10, the mobile terminal 100 is equipped with the plurality of vibration elements 153a and 153b. For example, the plurality of vibration elements 153a and 153b may be provided on the lower side and the upper side in the longitudinal direction with respect to the center C of the display part 151, respectively.

At least one of the plurality of vibration elements 153a and 153b can be the piezoelectric actuator 153a. As an example, a linear resonant actuator 153b may be disposed on the upper side of the display part 151, and the piezoelectric actuator 153a may be disposed on the lower side thereof. As another example, of course, the piezoelectric actuators may be disposed on the upper and lower sides of the display part 151.

The controller 180 uses the touch sensor of the display part 151 to sense the touch position of the display part 151 and drives any one of the plurality of vibration elements 153a and 153b to generate vibration based on the sensed touch position. For example, the controller 180 can drive the vibration element adjacent to the touch position.

As shown in FIG. 10 (a), when the upper region of the display part 151 is touched, the controller 180 drives the vibration element 153b positioned on the upper side of the display part 151. Here, the vibration element 153a positioned on the lower side of the display part 151 is not driven.

Here, when the touch is moved, the controller 180 drives the vibration element 153a, instead of the vibration element 153b, to generate vibration based on the moved touch position. For example, the controller 180 can drive the vibration element 153a adjacent to the touch position.

As shown in FIGS. 10B and 10C, when the touch is moved from the upper region to the lower region of the display part 151, the controller 180 drives the vibration element 153a positioned on the lower side of the display part 151. Here, when the vibration element 153a positioned on the lower side is driven, the vibration element 153b positioned on the upper side of the display part 151 is not driven.

In addition, the controller 180 can control a voltage (or current) applied to the vibration element 153a and 153b adjacent to the touch position, based on a distance between the touch position and the adjacent vibration element 153a and 153b. That is, the controller 180 can control a voltage applied to the vibration element 153a and 153b to change the frequency, intensity, pattern, etc. of the vibration generated in the vibration element 153a and 153b. Therefore, the user may feel different whenever moving the finger touching the display part 151.

For example, when the distance between the touch position and the vibration element 153a and 153b adjacent to the touch position becomes smaller, the controller 180 can increase a current applied to the adjacent vibration element 153a and 153b to increase the intensity of the vibration.

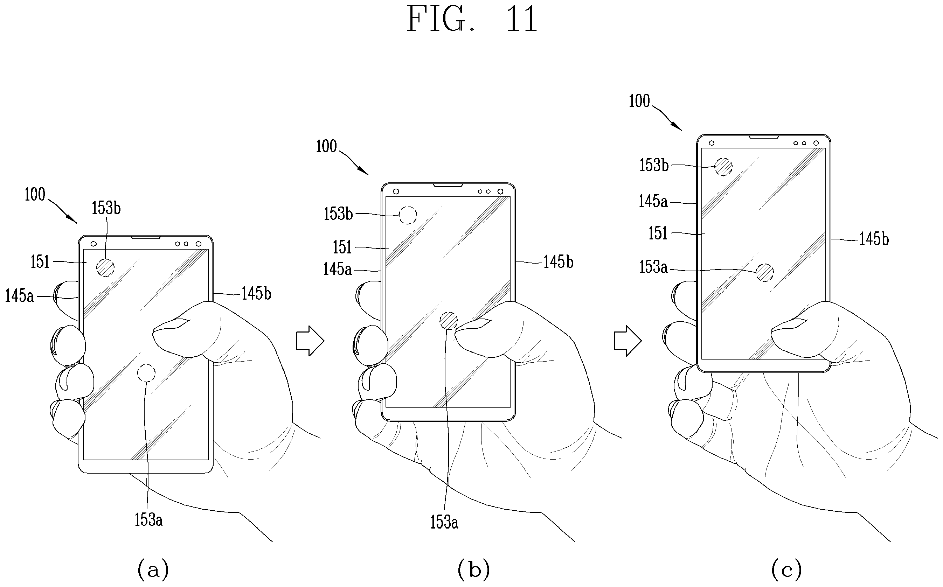

FIG. 11 is a concept view showing one example of a method of controlling the mobile terminal 100 using a grip sensor 145 and a plurality of vibration elements 153a and 153b.

Referring to FIG. 11, the mobile terminal 100 is equipped with the plurality of vibration elements 153a and 153b. For example, the vibration elements may be spaced apart in the longitudinal direction of the display part 151.

At least one of the plurality of vibration elements 153a and 153b can be the piezoelectric actuator 153a. As an example, a linear resonant actuator may be disposed on the upper side of the display part 151, and the piezoelectric actuator 153a may be disposed thereunder. As another example, of course, the piezoelectric actuators 153a may be spaced apart vertically along the longitudinal direction the display part 151.

The mobile terminal 100 may be equipped with a grip sensor part for sensing the grip of the terminal body. The grip sensor part may include a first grip sensor 145a and a second grip sensor 145b that are disposed vertically on the left side and the right side of the terminal body, respectively. The first and second grip sensors 145a and 145b may be configured to sense a pressure or touch during the grip.

When the user grips the terminal body with one hand, the user's finger or palm is brought into contact with at least some portion of the grip sensor part disposed vertically. For example, as shown in FIGS. 11A to 11C, portions of the first and second grip sensors 145a and 145b which the user's finger or palm contacts may vary depending on the grip type.

The controller 180 uses the grip sensor part to sense the grip of the terminal body and controls the driving of each of the plurality of vibration elements 153a and 153b to output one of the plurality of vibration patterns depending on the sensed grip position.

The controller 180 may use the first and second grip sensors 145a and 145b to calculate the grip positions or the distribution of the grip positions to distinguish grip states. As an example, as shown in FIGS. 11A to 11C, the grip states may be divided into first to third grip states.

When the grips of the first and second grip sensors 145a and 145b are all sensed, the controller 180 can distinguish the grip state into the first or second grip state based on the grip positions or the distribution of the grip positions of the first or second grip sensor 145a or 145b.

For example, as shown in FIG. 11 (a), when the grips of the upper side and the lower side of the first grip sensor 145a are all sensed, the controller 180 can determine the grip state as the first grip state and drive any one of the plurality of vibration elements 153a and 153b. Meanwhile, as shown in FIG. 11 (b), when only the grip of the lower side of the first grip sensor 145a is sensed, the controller 180 can determine the grip state as the second grip state and drive a different one of the plurality of vibration elements 153a and 153b.

When only the grip of one of the first and second grip sensors 145a and 145b is sensed, the controller 180 can determine the grip state as the third grip state and drive the plurality of vibration elements 153a and 153b. It can be understood that this using aspect occurs when the user grips the terminal body less than FIGS. 11A and 11B. Accordingly, it is possible to transfer vibration through the plurality of vibration elements 153a and 153b to clearly transfer haptic feedback to the user.

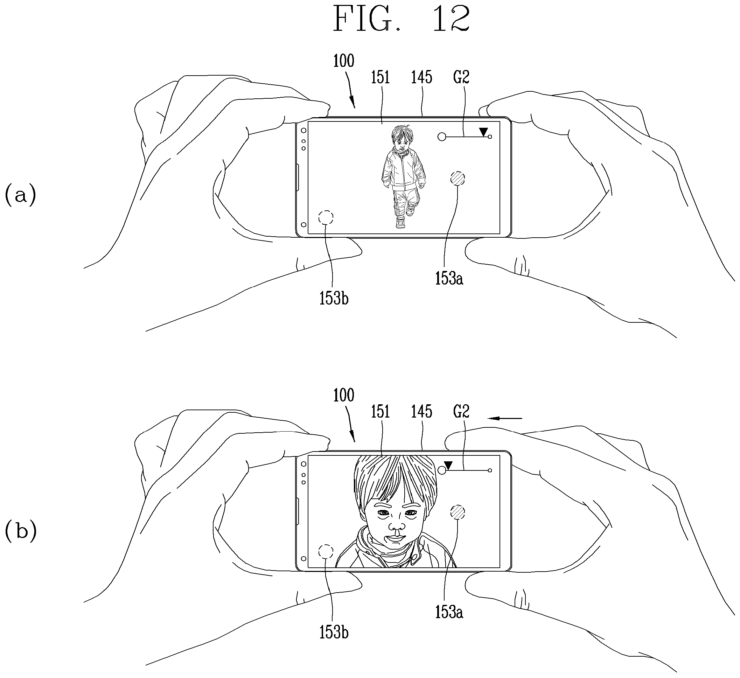

FIG. 12 is a concept view showing another example of the method of controlling the mobile terminal 100 using a grip sensor 145 and the plurality of vibration elements 153a and 153b.

Referring to FIG. 12, the mobile terminal 100 is equipped with the plurality of vibration elements 153a and 153b. For example, the plurality of vibration elements 153a and 153b may be spaced apart in the longitudinal direction of the display part 151.

At least one of the plurality of vibration elements 153a and 153b can be the piezoelectric actuator 153a. As an example, a linear resonant actuator may be disposed on the upper side of the display part 151, and the piezoelectric actuator 153a may be disposed thereunder. As another example, of course, the piezoelectric actuators 153a may be spaced apart vertically along the longitudinal direction the display part 151.

It is noted that, in the drawing, the mobile terminal 100 is rotated by 90 degrees to be placed in the transverse direction. Therefore, in the drawing, it can be understood that the plurality of vibration elements 153a and 153b are spaced apart along the transverse direction of the display part 151.

The mobile terminal 100 may be equipped with the grip sensor 145 for sensing the grip of the terminal body. The grip sensor 145 may be disposed vertically on one side (at least one of the left side and the right side) of the terminal body. The grip sensor 145 may be configured to sense a pressure or touch during the grip.

For example, the grip sensor 145 may be disposed on the right side of the terminal body. When the mobile terminal 100 is rotated by 90 degrees, the grip sensor 145 is disposed on the upper side of the mobile terminal 100.

When the user grips the terminal body in the transverse direction with both hands, the left and right fingers (generally, index fingers) of the user are brought into contact with the grip sensor 145, respectively. As shown, the left index finger contacts the left side of the grip sensor 145 and the right index finger contacts the right side of the grip sensor 145.

The controller 180 uses the grip sensor 145 to sense the grip of the terminal body and outputs a graphic object G2 to the display part 151 when the grip is sensed. The controller 180 may be configured to display the graphic object G2 only when the multi-contact is made to the grip sensor 145, which makes it possible for this function to be performed only when the user grips the terminal body in the transverse direction with both hands.

The graphic object G2 may be displayed adjacent to one side of the terminal body on which the grip sensor 145 is disposed. The graphic object G2 may be a type of indicator informing the user of the function capable of changing visual information outputted to the display part 151 depending on the movement of the grip.

The portion of the display part 151 with the graphic object G2 displayed thereon may be changed according to the setting. For example, when the right-hander is set, the controller can display the graphic object G2 on the display part 151 adjacent to the right side of the grip sensor 145. On the contrary, when the left-hander is set, the controller can display the graphic object G2 on the display part 151 adjacent to the left side of the grip sensor 145.

When the movement of the grip is sensed, the controller 180 drives any one of the plurality of vibration elements 153a and 153b to generate vibration based on the moved grip position. The controller 180 may drive the vibration element 153a, which is adjacent to the movement-sensed grip position, of the plurality of vibration elements 153a and 153b. For example, as shown, when the right index finger contacting the grip sensor 145 is moved to the left and right, the vibration element 153a disposed on the right side in the drawing is driven to generate vibration.

The controller 180 can control a current applied to the adjacent vibration element 153a and 153b based on the moved grip position. That is, the controller 180 can control a current applied to the vibration element 153a and 153b to change the frequency, intensity, pattern, etc. of the vibration generated in the vibration element 153a and 153b. Therefore, the user may feel different whenever moving the finger touching the grip sensor 145.

For example, when the right index finger contacting the grip sensor 145 is moved to the left side, the controller 180 can increase a current applied to the adjacent vibration element 153a to increase the intensity of the vibration.

In addition, the controller 180 may change visual information outputted to the display part 151 depending on the moved grip position. For example, when the grip position is moved, the controller 180 can enlarge or reduce visual information outputted to the display part 151. Here, the aforementioned graphic object G2 may be changed corresponding to the movement of the grip position. While the invention has been shown and described with respect to the preferred embodiments, it will be understood by those skilled in the art that various changes and modifications may be made without departing from the scope of the invention as defined in the following claims.

## Claims

1. A mobile terminal, comprising:
a window (151a);
a display (151d) disposed on the underside of the window (151a) to output visual information through the window (151a) and including an organic light emitting diode;
a fingerprint sensor (143) disposed on the underside of the display to sense a fingerprint of a user on the window; and
the mobile terminal being **characterised in** comprising
a piezoelectric actuator (153a) formed in an annular shape with a hollow portion (153a') to receive the fingerprint sensor (143) in the hollow portion (153a') and configured to transfer vibration to the window (151a) or sense a force applied to the window.

2. The mobile terminal of claim 1, further comprising:
a buffer sheet (151e) attached to the underside of the display (151d); and
a thermal sheet (151f) attached to the underside of the buffer sheet (151d) to diffuse heat generated in the display (151d),
wherein the fingerprint sensor (143) is attached to the underside of the display (151d), and the piezoelectric actuator (153a) is attached to the underside of the thermal sheet (151f).

3. The mobile terminal of claim 2, further comprising a flexible circuit (155b) disposed between the thermal sheet (151f) and the piezoelectric actuator (153a), formed in an annular shape to receive the fingerprint sensor (143) therein, and electrically connected to the piezoelectric actuator (153a), and
preferably wherein first and second electrodes (153a1, 153a2) are disposed on the both-side top surfaces of the piezoelectric actuator (153a), respectively, with the fingerprint sensor (143) therebetween, and the flexible circuit (155b) is electrically connected to the first and second electrodes (153a1, 153a2) and attached to the underside of the thermal sheet (151f).

4. The mobile terminal of claim 2, further comprising:
a flexible circuit (255b) electrically connected to first and second electrodes (253a1, 253a2) provided on the one-side top surface of the piezoelectric actuator (253a); and
a vibration transfer member (255d) formed in an annular shape to receive the fingerprint sensor (243) therein, disposed to cover the flexible circuit (255b), and attached to the underside of the thermal sheet (251f).

5. The mobile terminal of claim 4, wherein the vibration transfer member (255d) comprises:
a first portion (255d1) disposed between the flexible circuit (255b) and the thermal sheet (251f); and
a second portion (255d2) extended from the first portion (255d1) and disposed between the piezoelectric actuator (253a) and the thermal sheet (251f), with a greater thickness than that of the first portion (255d1),
wherein the first portion (255d1) and the second portion (255d2) are formed in an annular shape to receive the fingerprint sensor (243) therein, and
preferably wherein the vibration transfer member (255d) further comprises a support portion (255d3) extending downwardly from the second portion (255d2) and supported by a frame (204) on which the piezoelectric actuator (253a) is supported, and
further preferably wherein the flexible circuit (255b) and the support portion (255d3) are disposed at both sides, respectively, with the fingerprint sensor (243) therebetween.

6. The mobile terminal of one of claims 1 to 5, further comprising a flexible printed circuit board, FPCB, (344b) electrically connected to the fingerprint sensor (143, 243, 343) and extended in one direction from the fingerprint sensor (143, 243, 343),
wherein the FPCB (344b) is electrically connected to the first and second electrodes (153a1, 153a2, 253a1, 253a2, 353a1, 353a2) provided on the top surface of the piezoelectric actuator (153a, 253a, 353a).

7. The mobile terminal of one of claims 1 to 6, further comprising a controller (180) configured to:
- control a voltage applied to the piezoelectric actuator (153a, 253a, 353a) based on the fingerprint sensed by the fingerprint sensor (143, 243, 343), and/or
- control the driving of the display (151d) based on the fingerprint sensed by the fingerprint sensor (143, 243, 343) and the force applied to the window (151a) and sensed by the piezoelectric actuator (153a, 253a, 353a), and/or
- control the driving of the display (151d), being a touch screen, and the piezoelectric actuator (153a, 253a, 353a) by:
using the piezoelectric actuator (153a, 253a, 353a) to sense a force applied to a preset region of the touch screen, when the touch screen is turned off;
switching the preset region into the on state;
sensing a fingerprint of a user on the preset region; and
controlling the driving of the touch screen based on the fingerprint sensed by the fingerprint sensor (143, 243, 343), and/or
- displaying a graphic object on the preset region of the display, being touch screen, when the touch screen is turned off.

## Patentansprüche

1. Mobiles Endgerät, umfassend:
ein Fenster (151a);
eine Anzeige (151d), die an der Unterseite des Fensters (151a) angeordnet ist, um visuelle Informationen durch das Fenster (151a) auszugeben, und die eine organische Leuchtdiode enthält;
einen Fingerabdrucksensor (143), der an der Unterseite der Anzeige angeordnet ist, um einen Fingerabdruck eines Benutzers auf dem Fenster zu erfassen; und
wobei das mobile Endgerät **dadurch gekennzeichnet ist, dass** es umfasst
einen piezoelektrischen Aktuator (153a), der in einer ringförmigen Form mit einem hohlen Abschnitt (153a') ausgebildet ist, um den Fingerabdrucksensor (143) in dem hohlen Abschnitt (153a') aufzunehmen, und dazu eingerichtet ist, Schwingungen auf das Fenster (151a) zu übertragen oder eine auf das Fenster ausgeübte Kraft zu erfassen.

2. Mobiles Endgerät gemäß Anspruch 1, ferner umfassend:
eine Pufferfolie (151e), die an der Unterseite der Anzeige (151d) befestigt ist; und
eine thermische Schicht (151f), die an der Unterseite der Pufferplatte (151d) angebracht ist, um die im Display (151d) erzeugte Wärme zu verteilen,
wobei der Fingerabdrucksensor (143) an der Unterseite der Anzeige (151d) angebracht ist, und der piezoelektrische Aktuator (153a) an der Unterseite der thermischen Schicht (151f) angebracht ist.

3. Mobiles Endgerät gemäß Anspruch 2, ferner umfassend: einen flexiblen Schaltkreis (155b), der zwischen der thermischen Folie (151f) und dem piezoelektrischen Aktuator (153a) angeordnet ist, in einer ringförmigen Form ausgebildet ist, um den Fingerabdrucksensor (143) darin aufzunehmen, und elektrisch mit dem piezoelektrischen Aktuator (153a) verbunden ist, und
wobei vorzugsweise eine erste und eine zweite Elektrode (153a1, 153a2) auf den beidseitigen Oberseiten des piezoelektrischen Aktuators (153a) angeordnet sind, wobei sich der Fingerabdrucksensor (143) dazwischen befindet, und der flexible Schaltkreis (155b) elektrisch mit der ersten und der zweiten Elektrode (153a1, 153a2) verbunden und an der Unterseite der thermischen Schicht (151f) angebracht ist.

4. Mobiles Endgerät gemäß Anspruch 2, ferner umfassend:
ein flexibler Schaltkreis (255b), der elektrisch mit einer ersten und einer zweiten Elektrode (253a1, 253a2) verbunden ist, die auf der einseitigen oberen Fläche des piezoelektrischen Aktuators (253a) vorgesehen sind; und
ein Vibrationsübertragungselement (255d), das in einer ringförmigen Form ausgebildet ist, um den Fingerabdrucksensor (243) darin aufzunehmen, das so angeordnet ist, dass es den flexiblen Schaltkreis (255b) abdeckt, und das an der Unterseite der thermischen Schicht (251f) befestigt ist.

5. Mobiles Endgerät gemäß Anspruch 4, wobei das Vibrationsübertragungselement (255d) umfasst:
einen ersten Abschnitt (255d1), der zwischen dem flexiblen Schaltkreis (255b) und der thermischen Schicht (251f) angeordnet ist; und
einen zweiten Abschnitt (255d2), der sich von dem ersten Abschnitt (255d1) erstreckt und zwischen dem piezoelektrischen Aktuator (253a) und der thermischen Schicht (251f) angeordnet ist, mit einer größeren Dicke als die des ersten Abschnitts (255d1),
wobei der erste Abschnitt (255d1) und der zweite Abschnitt (255d2) in einer ringförmigen Form ausgebildet sind, um den Fingerabdrucksensor (243) darin aufzunehmen, und
wobei vorzugsweise das Vibrationsübertragungselement (255d) ferner einen Stützabschnitt (255d3) umfasst, der sich von dem zweiten Abschnitt (255d2) nach unten erstreckt und von einem Rahmen (204) gestützt wird, an dem der piezoelektrische Aktuator (253a) gestützt wird, und
weiter bevorzugt, wobei der flexible Schaltkreis (255b) und der Stützabschnitt (255d3) jeweils an beiden Seiten angeordnet sind, wobei der Fingerabdrucksensor (243) dazwischen liegt.

6. Mobiles Endgerät gemäß einem der Ansprüche 1 bis 5, ferner umfassend eine flexible Leiterplatte, FPCB, (344b), die elektrisch mit dem Fingerabdrucksensor (143, 243, 343) verbunden ist und sich in eine Richtung vom Fingerabdrucksensor (143, 243, 343) erstreckt,
wobei die FPCB (344b) elektrisch mit den ersten und zweiten Elektroden (153a1, 153a2, 253a1, 253a2, 353a1, 353a2) verbunden ist, die auf der oberen Oberfläche des piezoelektrischen Aktuators (153a, 253a, 353a) vorgesehen sind.

7. Mobiles Endgerät gemäß einem der Ansprüche 1 bis 6, ferner umfassend eine Steuerung (180), die eingerichtet ist zum:
- Steuern einer an den piezoelektrischen Aktuator (153a, 253a, 353a) angelegte Spannung basierend auf dem von dem Fingerabdrucksensor (143, 243, 343) erfassten Fingerabdruck, und/oder
- Steuern der Ansteuerung der Anzeige (151d) basierend auf dem vom Fingerabdrucksensor (143, 243, 343) erfassten Fingerabdruck und der auf das Fenster (151a) ausgeübten und vom piezoelektrischen Aktuator (153a, 253a, 353a) erfassten Kraft, und/oder
- Steuern der Ansteuerung der Anzeige (151d), bei der es sich um einen Touchscreen handelt, und des piezoelektrischen Aktuators (153a, 253a, 353a) durch:
Verwenden des piezoelektrischen Aktuators (153a, 253a, 353a) zum Erfassen einer Kraft, die auf einen voreingestellten Bereich des Touchscreens ausgeübt wird, wenn der Touchscreen ausgeschaltet ist;
Schalten des voreingestellten Bereichs in den Ein-Zustand;
Erfassen eines Fingerabdrucks eines Benutzers auf dem voreingestellten Bereich; und
Steuern der Ansteuerung des Touchscreens basierend auf dem vom Fingerabdrucksensor (143, 243, 343) erfassten Fingerabdruck, und/oder
- Anzeigen eines grafischen Objekts auf dem voreingestellten Bereich der Anzeige, die ein Touchscreen ist, wenn der Touchscreen ausgeschaltet ist.

## Revendications

1. Terminal mobile, comprenant :
une fenêtre (151a) ;
un afficheur (151d) disposé sur le dessous de la fenêtre (151a) pour délivrer en sortie des informations visuelles à travers la fenêtre (151a) et incluant une diode électroluminescente organique ;
un capteur (143) d'empreintes digitales disposé sur le dessous de l'afficheur pour détecter une empreinte digitale d'un utilisateur sur la fenêtre ; et
le terminal mobile étant **caractérisé en ce que** comprenant
un actionneur piézoélectrique (153a) formé à une forme annulaire avec une partie creuse (153a') pour recevoir le capteur (143) d'empreintes digitales dans la partie creuse (153a') et configuré pour transférer une vibration à la fenêtre (151a) ou détecter une force appliquée à la fenêtre.

2. Terminal mobile selon la revendication 1, comprenant en outre :
une feuille tampon (151e) fixée sur le dessous de l'afficheur (151d) ; et
une feuille thermique (151f) fixée sur le dessous de la feuille tampon (151e) pour diffuser de la chaleur générée par l'afficheur (151d),
dans lequel le capteur (143) d'empreintes digitales est fixé sur le dessous de l'afficheur (151d), et l'actionneur piézoélectrique (153a) est fixé sur le dessous de la feuille thermique (151f).

3. Terminal mobile selon la revendication 2, comprenant en outre un circuit flexible (155b) disposé entre la feuille thermique (151f) et l'actionneur piézoélectrique (153a), formé à une forme annulaire pour recevoir le capteur (143) d'empreintes digitales dans celui-ci, et électriquement connecté à l'actionneur piézoélectrique (153a), et
préférablement dans lequel des première et deuxième électrodes (153a1, 153a2) sont disposées sur les surfaces supérieures des deux côtés de l'actionneur piézoélectrique (153a), respectivement, avec le capteur (143) d'empreintes digitales entre celles-ci, et le circuit flexible (155b) est électriquement connecté aux première et deuxième électrodes (153a1, 153a2) et fixé sur le dessous de la feuille thermique (151f).

4. Terminal mobile selon la revendication 2, comprenant en outre :
un circuit flexible (255b) électriquement connecté à des première et deuxième électrodes (253a1, 253a2) prévues sur la surface supérieure d'un côté de l'actionneur piézoélectrique (253a) ; et
un élément (255d) de transfert de vibration formé à une forme annulaire pour recevoir le capteur (243) d'empreintes digitales dans celui-ci, disposé de façon à recouvrir le circuit flexible (255b), et fixé sur le dessous de la feuille thermique (251f).

5. Terminal mobile selon la revendication 4, dans lequel l'élément (255d) de transfert de vibration comprend :
une première partie (255d1) disposée entre le circuit flexible (255b) et la feuille thermique (251f) ; et
une deuxième partie (255d2) étendue depuis la première partie (255d1) et disposée entre l'actionneur piézoélectrique (253a) et la feuille thermique (251f), avec une épaisseur supérieure à celle de la première partie (255d1),
dans lequel la première partie (255d1) et la deuxième partie (255d2) sont formées à une forme annulaire pour recevoir le capteur (243) d'empreintes digitales dans celles-ci, et
préférablement dans lequel l'élément (255d) de transfert de vibration comprend en outre une partie support (255d3) s'étendant vers le bas depuis la deuxième partie (255d2) et supportée par un cadre (204) sur lequel l'actionneur piézoélectrique (253a) est supporté, et
en outre préférablement dans lequel le circuit flexible (255b) et la partie support (255d3) sont disposés sur les deux côtés, respectivement, avec le capteur (243) d'empreintes digitales entre ceux-ci.

6. Terminal mobile selon l'une des revendications 1 à 5, comprenant en outre une carte de circuits imprimés flexible, FPCB, (344b) électriquement connectée au capteur (143, 243, 343) d'empreintes digitales et étendue dans un sens depuis le capteur (143, 243, 343) d'empreintes digitales,
dans lequel la FPCB (344b) est électriquement connectée aux première et deuxième électrodes (153a1, 153a2, 253a1, 253a2, 353a1, 353a2) prévues sur la surface supérieure de l'actionneur piézoélectrique (153a, 253a, 353a).

7. Terminal mobile selon l'une des revendications 1 à 6, comprenant en outre un contrôleur (180) configuré pour :
- commander une tension appliquée à l'actionneur piézoélectrique (153a, 253a, 353a) sur la base de l'empreinte digitale détectée par le capteur (143, 243, 343) d'empreintes digitales, et/ou
- commander l'activation de l'afficheur (151d) sur la base de l'empreinte digitale détectée par le capteur (143, 243, 343) d'empreintes digitales et de la force appliquée à la fenêtre (151a) et détectée par l'actionneur piézoélectrique (153a, 253a, 353a), et/ou
- commander l'activation de l'afficheur (151d), étant un écran tactile, et de l'actionneur piézoélectrique (153a, 253a, 353a) en :
utilisant l'actionneur piézoélectrique (153a, 253a, 353a) pour détecter une force appliquée à une région prédéfinie de l'écran tactile, lorsque l'écran tactile est désactivé ;
mettant la région prédéfinie dans l'état activé ;
détectant une empreinte digitale d'un utilisateur sur la région prédéfinie ; et
commandant l'activation de l'écran tactile sur la base de l'empreinte digitale détectée par le capteur (143, 243, 343) d'empreintes digitales, et/ou
- afficher un objet graphique sur la région prédéfinie de l'afficheur, étant un écran tactile, lorsque l'écran tactile est désactivé.
